(19) Europäisches Patentamt
European Patent Office
Office européen des brevets

(11) **EP 2 427 781 B1**

(12) **EUROPÄISCHE PATENTSCHRIFT**

(45) Veröffentlichungstag und Bekanntmachung des Hinweises auf die Patenterteilung:
**26.06.2013 Patentblatt 2013/26**

(51) Int Cl.:
*G01S 5/02* *(2010.01)*

(21) Anmeldenummer: **10718588.6**

(86) Internationale Anmeldenummer:
**PCT/EP2010/056214**

(22) Anmeldetag: **06.05.2010**

(87) Internationale Veröffentlichungsnummer:
**WO 2010/128121 (11.11.2010 Gazette 2010/45)**

(54) **KONZEPT ZUM BESTIMMEN EINES SCHÄTZWERTS EINER LAGE EINES EMPFANGSELEMENTS**

DESIGN FOR DETERMINING AN ESTIMATED VALUE FOR A POSITION OF A RECEPTION ELEMENT

CONCEPT POUR DÉTERMINER UNE VALEUR ESTIMÉE REPRÉSENTATIVE DE L'EMPLACEMENT D'UN ÉLÉMENT DE RÉCEPTION

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **07.05.2009 DE 102009020216**

(43) Veröffentlichungstag der Anmeldung:
**14.03.2012 Patentblatt 2012/11**

(73) Patentinhaber: **Fraunhofer-Gesellschaft zur Förderung der angewandten Forschung e.V.
80686 München (DE)**

(72) Erfinder:
• **EDELHÄUSSER, Thorsten
90409 Nürnberg (DE)**
• **KÓKAI, Gabriella
91058 Erlangen (DE)**
• **FRÜHAUF, Hans Holm
91058 Erlangen (DE)**

(74) Vertreter: **Stöckeler, Ferdinand
Schoppe, Zimmermann, Stöckeler & Zinkler
Patentanwälte
Postfach 246
82043 Pullach bei München (DE)**

(56) Entgegenhaltungen:
• **JÜRGEN KEMPER ET AL: "Human-Assisted Calibration of an Angulation Based Indoor Location System" SENSOR TECHNOLOGIES AND APPLICATIONS, 2008. SENSORCOMM '08. SECOND INTERNATIONAL CONFERENCE ON, IEEE, PISCATAWAY, NJ, USA, 25. August 2008 (2008-08-25), Seiten 196-201, XP031319562 ISBN: 978-0-7695-3330-8**
• **THORSTEN EDELHAUSSER ET AL: "Autonomous Configuration Method for Real-Time Location Systems" ADAPTIVE HARDWARE AND SYSTEMS, 2009. AHS 2009. NASA/ESA CONFERENCE ON, IEEE, PISCATAWAY, NJ, USA, 29. Juli 2009 (2009-07-29), Seiten 265-272, XP031563073 ISBN: 978-0-7695-3714-6**

**Beschreibung**

Die vorliegende Erfindung bezieht sich auf Vorrichtungen und Verfahren zur Bestimmung eines Schätzwerts für eine Lage eines Empfangselements, wie es beispielsweise für ein autonomes Einmessen von Antennenpositionen lokaler Funkortungssysteme eingesetzt werden kann.

Für verschiedenste Anwendungen kann es interessant sein, eine Position eines Objekts zu kennen. Zu solchen Anwendungen zählen beispielsweise so genannte Indoor-Lokalisierungssysteme, die einen Funksender z. B. auf Basis von sogenannten Radiofingerabdrücken lokalisieren können. Ein weiteres, zunehmend interessantes Anwendungsgebiet ist der Bereich der Logistik, wobei Ortungssysteme eingesetzt werden können, um Positionen von logistisch zu verfolgenden Gütern zu ermitteln. Im Logistikbereich werden dazu Objekte oftmals mit sogenannten RFID-Transpondern (RFID = Radio Frequency IDentification) versehen. Durch einen Einsatz eines Lesegeräts mit mehreren Lesegerätantennen kann dann beispielsweise die Position eines zu lokalisierenden Objekts ermittelt werden. Ein weiteres Gebiet, in dem Ortungssysteme eingesetzt werden können, ist beispielsweise das Gebiet der Lokalisierung bzw. Verfolgung von Sportlern und/oder Sportgeräten, wie z. B. beim Fußball. Die Verfolgung der Sportler und des Spielgeräts (z. B. Ball) ermöglicht eine Bestimmung von Statistiken über einen Spielverlauf, der für Zuschauer durchaus interessant sein kann.

Ein System, das Objekte mit hoher Genauigkeit in Echtzeit verfolgen kann, wird im Folgenden als sogenanntes Echtzeit-Lokalisierungssystem bzw. Real-Time Location System (RTLS) bezeichnet, welches es ermöglicht, in einen verfolgten Prozess einzugreifen oder ihn zu observieren.

Bekannte Ortungssysteme, wie beispielsweise das GPS-System (Global Positioning System) oder GALILEO, welches derzeit installiert wird, sind für bestimmte Anwendungen nicht genau genug oder überhaupt nicht zu gebrauchen, wie beispielsweise innerhalb von Gebäuden. Daher benötigt ein Echtzeit-Lokalisierungssystem seine eigene Infrastruktur, die entsprechend konfiguriert werden muss. Dies gilt insbesondere für mobile Lokalisierungssysteme, die an verschiedenen Orten beispielsweise für Sportereignisse eingesetzt werden können.

Werden Lokalisierungssysteme basierend auf Drahtlostechnik eingesetzt, so ist für die Ortsbestimmung stets eine Kenntnis eines oder mehrerer Sende- und/oder Empfangselemente, wie z. B. Antennen, notwendig. Insbesondere bei mobilen Systemen, die an verschiedenen Orten mit verschiedenen Infrastrukturen installiert werden, ist eine möglichst genaue Bestimmung Lage, d. h. einer Position und Orientierung, der Sende- und/oder Empfangselemente zur Installation des Systems notwendig.

Während derzeit den Ortungssystemen zugrundeliegende, verschiedene Technologien an sich auf ihre Tauglichkeit zur Positionsbestimmung untersucht werden, beschäftigt man sich kaum mit der Initialisierung, d. h. der Bestimmung von Position und Orientierung von Lokalisationsantennen, derartiger Ortungssysteme. Um die Lage einer Lokalisationsantenne eines Ortungssystems zu ermitteln, werden zumeist manuelle Verfahren, wie z. B. Lasereinmessung, herangezogen. Solche manuellen Verfahren zur Lagebestimmung von Sende - und/oder Empfangselementen sind aber zumeist aufwendig und teuer.

Bei Jürgen Kemper et al: "Human-Assisted Calibration of an Angulation Based Indoor Location System", SENSORS TECHNOLOGIES AND APPLICATIONS, 2008. SENSORCOMM '08. SECOND INTERNATINOAL CONFERENCE ON, IEEE, PISCATAWAY, NJ, USA, 25. August 2008, Seiten 196 - 201 ist eine Kalibrierung von auf einer Angulation basierenden Indoor-Lokalisierungssystemen beschrieben.

Somit besteht die Aufgabe der vorliegenden Erfindung darin, ein verbessertes Konzept zur Bestimmung einer unbekannten Lage eines Sende- und/oder Empfangselements, wie z. B. einer Lokalisationsantenne, bereitzustellen.

Diese Aufgabe wird durch eine Vorrichtung mit den Merkmalen des Anspruchs 1, ein System nach Anspruch 14 und ein Verfahren gemäß Anspruch 15 gelöst.

Die Erkenntnis der vorliegenden Erfindung besteht darin, die oben gestellte Aufgabe durch ein automatisiertes und autonomes Einmessen eines Ortungssystems unter Zuhilfenahme eines heuristischen Verfahrens zu lösen.

Viele Optimierungsprobleme können in der Praxis nicht mit exakten mathematischen Verfahren gelöst werden. Um dennoch Lösungen bereitstellen zu können, können heuristische Optimierungsverfahren verwendet werden. Strategien, die auf Hypothesen und Vermutungen aufbauen und die mit gewisser Wahrscheinlichkeit, jedoch ohne Garantie, das Auffinden einer Lösung beschleunigen sollen, heißen Heuristiken. Typische Heuristiken sind das Ausnutzen bekannter Eigenschaften von Lösungen, die Nachbildung menschlicher Problemlösungsprozesse, oder Verwendung biologischer Vorbilder.

Heuristische Methoden liefern nicht unbedingt das Optimum, aber hoffentlich in akzeptabler Zeit gute Nehrungslösungen. Man unterscheidet dabei grundsätzlich zwischen Konstruktionsheuristiken, die meist sehr problemspezifisch, häufig schnell und einfach aufgebaut sind, und Verbesserungsheuristiken, die auf Konstruktionsheuristiken aufsetzen und versuchen, Lösungen schrittweise durch Änderungen zu verbessern. Sie basieren auf problemunabhängigeren Prinzipien, sind oft langsamer, liefern aber bessere Ergebnisse.

In der Informatik kommen heuristische Methoden zum Einsatz, um mit geringem Rechenaufwand und kurzer Laufzeit zulässige Lösungen für ein bestimmtes Problem zu erhalten. Klassische Algorithmen versuchen, einerseits die optimale Rechenzeit und andererseits die optimale Lösung zu garantieren. Heuristische Verfahren verwerfen einen oder beide dieser Ansprüche, um bei komplexen Aufgaben einen Kompromiss zwischen dem Rechenaufwand und der Güte der gefundenen Lösung einzugehen. Dazu wird versucht, mithilfe von Schätzungen, Faustregeln, intuitiv-intelligentem Raten oder unter zusätzlichen Hilfsannahmen eine gute Lösung zu erzeugen, ohne optimale Eigenschaften zu garantieren.

Konkrete Beispiele für heuristische Verfahren sind

- Evolutionärer Algorithmus,
- Partikel-Schwarm-Algorithmus,
- Ameisenalgorithmus,
- Scatter Search,
- Tabu Search, usw.

Ausführungsbeispiele der vorliegenden Erfindung werden im nachfolgenden anhand eine heuristischen Verfahrens in Form eines evolutionärer Algorithmus beschrieben. Dazu kann beispielsweise eine sich selbständig bewegende Signalquelle, wie beispielsweise ein Roboter, eingesetzt werden, die an bekannten absoluten Messpositionen Ortungssignale ausstrahlt, die von einem Empfangselement des Ortungssystems an einer unbekannten absoluten Position und mit einer unbekannten absoluten Orientierung, d. h. also einer unbekannten Lage, empfangen werden. Je nach Ausführungsbeispiel der vorliegenden Erfindung können aus den empfangenen Ortungssignalen Lokalisierungsdaten, wie z. B. Ortungssignaleinfallswinkel (AoA = Angle of Arrival), Ortungssignalankunftszeit (ToA = Time of Arrival) oder eine Ortungssignal-Round-Trip-Zeit (RTT = Round-Trip-Time), bestimmt werden. Die so erhaltenen Lokalisierungsdaten, welche jeweils auf eine relative Lage von dem Empfangselement zu der beweglichen Signalquelle hindeuten, und die dazu entsprechenden absoluten Positionen der beweglichen Signalquelle können im Anschluss einem heuristischen Verfahren, wie z. B. einem evolutionären Algorithmus, übergeben werden, um ohne jedwede Kenntnis der gesuchten absoluten Lage des Empfangselements einen Schätzwert für die absolute Lage zu bestimmen.

Der Evolutionäre Algorithmus (EA) bezeichnet dabei ein Optimierungsverfahren, das als Vorbild die biologische Evolution hat. Dabei werden Schätzwertindividuen durch ihre Schätzwertattribute, d.h. Schätzwerte für absolute Position und Orientierung, beschrieben. Die Schätzwertindividuen müssen sich bzgl. Selektionsbedingungen als möglichst geeignet behaupten, und dürfen dementsprechend ihre Schätzwertattribute vererben - oder eben nicht. Im Laufe mehrerer Iterationen entwickelt sich so eine Schätzwertpopulation immer näher an das Optimum, d.h. die tatsächliche absolute Lage.

Ausführungsbeispiele der vorliegenden Erfindung schaffen dazu eine Vorrichtung zum Bestimmen eines Schätzwerts für eine absolute Lage eines Empfangselements, das Signale einer an verschiedene absolute Messpositionen bewegbaren Signalquelle empfangen kann, wobei, basierend auf den empfangenen Signalen, Lokalisierungsdaten gemessen werden können, welche auf eine relative Lage von dem Empfangselement zu der bewegbaren Signalquelle hindeuten, wobei die Vorrichtung ausgebildet ist, um den Schätzwert basierend auf wenigstens zwei unterschiedlichen absoluten Messpositionen und dazu entsprechenden Lokalisierungsdaten vermittels eines heuristischen Verfahrens, wie z. B. einem evolutionären Algorithmus, zu bestimmen.

Diese Vorrichtung bzw. Recheneinheit kann in einem erfindungsgemäßen System zur Initialisierung eines Ortungssystems eingesetzt werden, wobei das Ortungssystem ein Empfangselement in einer absoluten Lage, d. h. an einer absoluten Position mit einer absoluten Orientierung, umfasst. Das erfindungsgemäße Initialisierungssystem umfasst ferner eine an verschiedene absolute Messpositionen bewegbare Signalquelle, die Signale aussenden kann, die von dem Empfangselement empfangen werden können, und worauf basierend Lokalisierungsdaten ermittelt werden können, welche auf eine relative Lage von dem Empfangselement zu der bewegbaren Signalquelle hindeuten. Schließlich weist das Initialisierungssystem eine Vorrichtung zum Bestimmen eines Schätzwerts für die absolute Lage des Empfangselements basierend auf wenigstens zwei unterschiedlichen absoluten Messpositionen der Signalquelle und dazu entsprechenden Lokalisierungsdaten vermittels eines evolutionären Algorithmus auf.

Somit kann das folgende erfindungsgemäße Verfahren ausgeführt werden:

1. Koordinatenursprung eines Referenzkoordinantensystems auf einen geeigneten Punkt festlegen,

2. Mobile Signalquelle auf eine beliebige, bekannte, absolute Messposition setzen (kann Koordinatenursprung sein),

3. Aussenden eines elektromagnetischen Ortungssignals an der bekannten absoluten Messposition mittels der beweglichen Signalquelle,

4. Empfangen des elektromagnetischen Ortungssignals mittels des Empfangselements und Ermitteln, basierend auf dem empfangenen Ortungssignal, von Lokalisierungsdaten (AoA, ToA, RTT), welche auf eine relative Lage von dem Empfangselement zu der bewegbaren Signalquelle hindeuten,

5. Solange nicht wenigstens zwei verschiedene Messpunkte verwendet wurden, Bewegen der mobilen Signalquelle zum nächsten Messpunkt und zurück zu Punkt 3, ansonsten weiter mit Punkt 6.

6. Starten eines heuristischen Verfahrens (z. B. evolutionärer Algorithmus) mit den Daten der Datenhaltung.

Als bewegbare bzw. mobile Signalquelle kann gemäß Ausführungsbeispielen ein Roboter mit einer Antenne verwendet werden. Dabei kann der Roboter in der Lage sein, selbständig jeden der Messpunkte anzufahren und dabei seine Position beispielsweise mittels Odometrie, einem inertialen Navigationssystem (INS) oder differentiellem GPS zu bestimmen. Mittels einer Netzwerkanbindung (z. B. WLAN) können die Messpositionsdaten an eine Recheneinheit zur Datenhaltung, zur Steuerung der mobilen Signalquelle und/oder zum Berechnen des heuristischen Verfahrens bzw. evolutionären Algorithmus gesendet werden.

Gemäß einem Ausführungsbeispiel der vorliegenden Erfindung handelt es sich bei dem Empfangselement um ein Antennenarray mit wenigstens zwei Antennenelementen, so dass ein Einfallswinkel des elektromagnetischen Ortungssignals relativ zur Orientierung des Antennenarrays als Lokalisierungsdatum ermittelt werden kann. Denkbar sind aber auch andere Empfangselementanordnungen, die es ermöglichen, z. B. eine Ankunftszeit (ToA) des elektromagnetischen Ortungssignals oder eine Round-Trip-Zeit (RTT) eines Ortungssignals zu bestimmen. Dazu kann auch eine zeitliche Synchronisation von Empfangselement und mobiler Signalquelle notwenig sein.

Ausführungsbeispiele der vorliegenden Erfindung bieten den Vorteil, dass ein automatisiertes Einmessen, d. h. eine automatisierte Lagebestimmung, von Sende- und/oder Empfangselementen eines Ortungssystems ohne jedwede Kenntnis der absoluten Lage der Sende- und/oder Empfangselemente möglich ist. Dies ist besonders vorteilhaft zur Einmessung von Ortungssystemen, bei denen eine Lagebestimmung einzelner Komponenten mittels bestehender Ortungssysteme, wie beispielsweise GPS, nicht möglich oder zu ungenau ist. Durch das heuristische Verfahren, wie z. B. einen evolutionären Algorithmus, sind keine Umgebungsmodelle notwendig, da sich eine Schätzwertpopulation des heuristischen Verfahrens iterativ immer näher an die tatsächliche absolute Lage des Empfangselements entwickelt - bei einem evolutionären Algorithmus ganz nach dem Vorbild der biologischen Evolution.

Ausführungsbeispiele der vorliegenden Erfindung werden nachfolgend Bezug nehmend auf die beiliegenden Zeichnungen näher erläutert. Es zeigen:

Fig. 1     eine schematische Darstellung eines Systems gemäß einem Ausführungsbeispiel der vorliegenden Erfindung;

Fig. 2     ein schematisches Ablaufdiagramm eines Verfahrens zum Bestimmen eines Schätzwerts für eine absolute Lage eines Empfangselements gemäß einem Ausführungsbeispiel der vorliegenden Erfindung;

Fig. 3     eine schematische Darstellung der Lage eines Empfangselements und einer Signalquelle in einem Bezugskoordinatensystem;

Fig. 4     eine schematische Darstellung eines evolutionären Algorithmus;

Fig. 5     ein Blockschaltbild einer Vorrichtung zum Bestimmen eines Schätzwerts für eine absolute Lage eines Empfangselements gemäß einem Ausführungsbeispiel der vorliegenden Erfindung;

Fig. 6     eine Abbildung einer beweglichen Signalquelle gemäß einem Ausführungsbeispiel der vorliegenden Erfindung;

Fig. 7     eine Abbildung eines Versuchsaufbaus gemäß einem Ausführungsbeispiel der vorliegenden Erfindung;

Fig. 8     eine Darstellung von Simulationsergebnissen bei einer Suche nach optimalen Parametern für den evolutionären Algorithmus;

Fig. 9     eine Darstellung eines mittleren Schätzfehlers für verschiedene Einfallswinkelvarianzen, aufgetragen über eine Anzahl von Messpunkten;

Fig. 10    eine Darstellung eines mittleren Schätzfehlers von Antennenpositionen und -orientierung, aufgetragen über eine Anzahl von Messpunkten;

Fig. 11    beispielhafte Darstellung einer Entwicklung von Schätzwertindividuen hin zu einem optimalen Schätzwert, gemäß einem evolutionären Algorithmus.

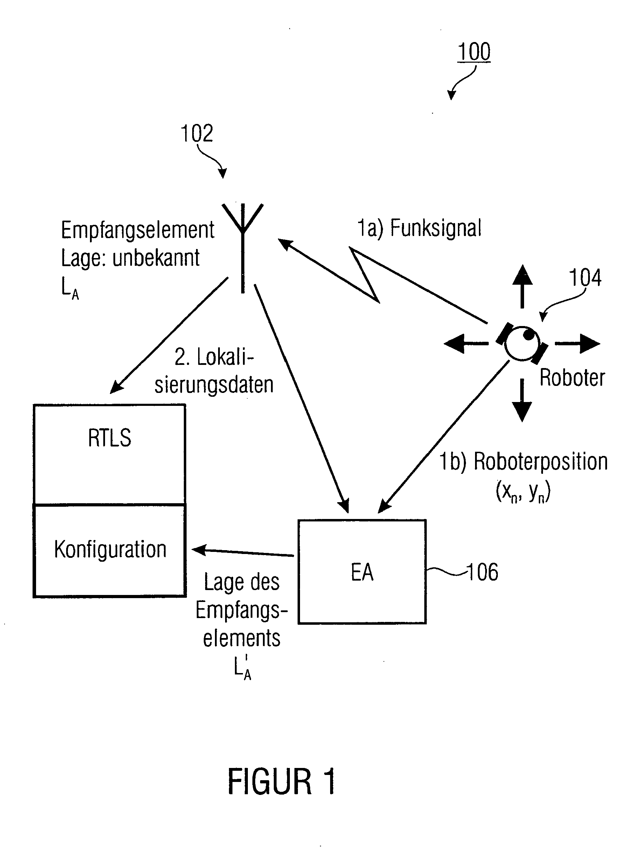

Fig. 1 zeigt schematisch ein System 100 zur Initialisierung eines Echtzeit-Lokalisierungssystems bzw. Real-Time Location Systems (RTLS) gemäß einem Ausführungsbeispiel der vorliegenden Erfindung.

Das System umfasst ein Empfangselement 102 mit einer unbekannten absoluten Position $(x_A, y_A)$ und einer unbekannten Orientierung $(\alpha_A)$. Die Position $(x_A, y_A)$ und die Orientierung $(\alpha_A)$ sollen im Nachfolgenden unter dem Begriff "Lage" $L_A$ des Empfangselements 102 zusammengefasst werden. Obwohl im Nachfolgenden zum leichteren Verständnis lediglich zweidimensionale Positionen $(x_A, y_A)$ beschrieben werden, ist das erfindungsgemäße Konzept natürlich ebenso auf dreidimensionale Positionen $(x_A, y_A, z_A)$ anwendbar.

Das System 100 umfasst weiterhin eine verschiedene, absolute Messpositionen $(x_n, y_n)$ (n = 1,2,...,N) bewegbare Signalquelle 104, wie beispielsweise einen autonomen Roboter. Die Signalquelle 104 kann an den Messpositionen $(x_n, y_n)$ elektromagnetische Ortungssignale aussenden, die von dem Empfangselement 102 empfangen werden können. Basierend auf den empfangenen Ortungssignalen können seitens des Empfangselements 102 Lokalisierungsdaten $ß_n$ ermittelt werden, welche auf eine relative Lage zwischen dem Empfangselement 102 und der bewegbaren Signalquelle 104 hindeuten.

Die Lokalisierungsdaten und die dazu entsprechenden N Messpositionen $(x_n, y_n)$ werden über entsprechende Schnittstellen einer Vorrichtung 106 zum Bestimmen eines Schätzwerts $L_A'$ für die absolute Lage $L_A$ des Empfangselements 102 bereitgestellt. Der Schätzwert $L_A'$ wird dabei basierend auf wenigstens zwei unterschiedlichen absoluten Messpositionen $(x_n, y_n)$ der Signalquelle 104 und dazu entsprechende Lokalisierungsdaten vermittels eines heuristischen Verfahrens bestimmt.

Bevor im Einzelnen auf die Vorrichtung 106 bzw. das darin ablaufende heuristische Verfahren in Form eines evolutionären Algorithmus eingegangen wird, werden im Nachfolgenden die einzelnen Elemente des Systems 100 näher beleuchtet.

Das Empfangselement 102 ist auch Teil des Echtzeit-Lokalisierungssystems. Um einen mobilen Transmitter lokalisieren zu können, benötigt das Echtzeit-Lokalisierungssystem Kenntnis über eine absolute Position und eine absolute Orientierung bzw. Ausrichtung eines oder mehrerer Empfangselemente, wie z. B. Lokalisierungsantennen. Für die vorliegende Erfindung ist es essentiell, dass das Empfangselement 102 Lokalisierungsdaten bezüglich des Senders 104 liefert, wobei die Lokalisierungsdaten abhängig von der verwendeten Lokalisierungsmethode sind. Gemäß Ausführungsbeispielen können Lokalisierungsdaten sein:

- Ankunftszeit (ToA),

- Round-Trip-Zeit (RTT), oder

- Einfallswinkel des Ortungssignals (AoA).

Die mit Hilfe des Empfangselements 102 gemessenen Lokalisierungsdaten werden, wie anhand von Fig. 1 dargestellt, in einer Initialisierungsphase des Echtzeit-Lokalisierungssystems der Vorrichtung 106 zum Schätzen zusammen mit den dazu entsprechenden Messpositionen $(x_n, y_n)$ bereitgestellt. Nach der Schätzung der Lage des Empfangselements 102 werden Lokalisierungsdaten dem Lokalisierungssystem (RTLS) selbst zur Verfügung gestellt, damit - nun mit Kenntnis von absoluten Lagen der verwendeten Empfangselemente - Positionen von zu lokalisierenden Objekten bestimmt werden können.

Zur Erläuterung des erfindungsgemäßen Konzepts wird im Nachfolgenden von einem ein Antennenarray mit wenigstens zwei Antennenelementen umfassenden Empfangselement 102 ausgegangen, so dass als Lokalisierungsdaten Einfallswinkel $\beta_n$ (n = 1,2,...,N) der Funksignale von der mobilen Signalquelle 104 herangezogen werden können. Dabei kann es sich beispielsweise um Funksignale im 2.4-GHz-Band handeln, wie es beispielsweise bei einem WLAN-System zum Einsatz kommt. Ein Einfallswinkel $\beta_n$ (n = 1,2,...,N) bezeichnet einen Winkel des empfangenen Ortungssignals relativ zu der absoluten Position $(x_A, y_A)$ und Orientierung $\alpha_A$ des Empfangselements 102.

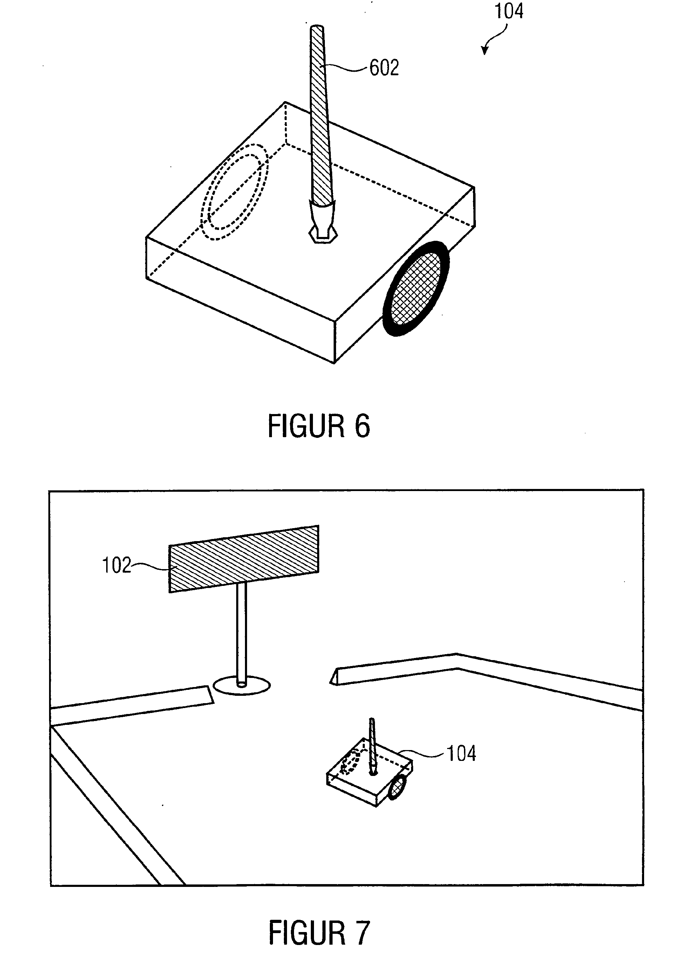

Bei der beweglichen Signalquelle 104 kann es sich beispielsweise um einen autonomen Roboter handeln, der selbständig verschiedene Messpositionen $(x_n, y_n)$ ansteuern kann. Dabei ist der Roboter 104 ausgebildet, um seine eigenen Messpositionen $(x_n, y_n)$ mittels Odometrie zu bestimmen und sie über eine Schnittstelle der Vorrichtung 106 zum Schätzen bereitzustellen. Odometrie bezeichnet die Positionsbestimmung eines Fahrzeugs durch die Beobachtung seiner Räder. Sie hat den Nachteil, dass die Positionsgenauigkeit mit der zurückgelegten Distanz nachlässt. Der Roboter 104 ist ausgebildet, um automatisch vordefinierte Messpositionen $(x_n, y_n)$ anzusteuern. Außerdem kann er eine WLAN-Verbindung aufbauen, um mit dem System 100 und insbesondere mit der Vorrichtung 106 zu kommunizieren. Weiterhin ist der Roboter 104 mit Infrarotsensoren ausgestattet, die Distanzen zu Hindernissen messen können, um Kollisionen mit diesen Hindernissen zu verhindern. Eine erfindungsgemäße Signalquelle 104 in Form eines Roboters mit einer omnidirektionalen Sendeantenne 602 ist exemplarisch in Fig. 6 abgebildet. Mittels des Empfangselements 102 in Form eines Antennenarrays können die Lokalisierungsdaten $\beta_n$ (Einfallswinkel) von über die Antenne 602 des Roboters 104 emittierten Funksignalen ermittelt werden.

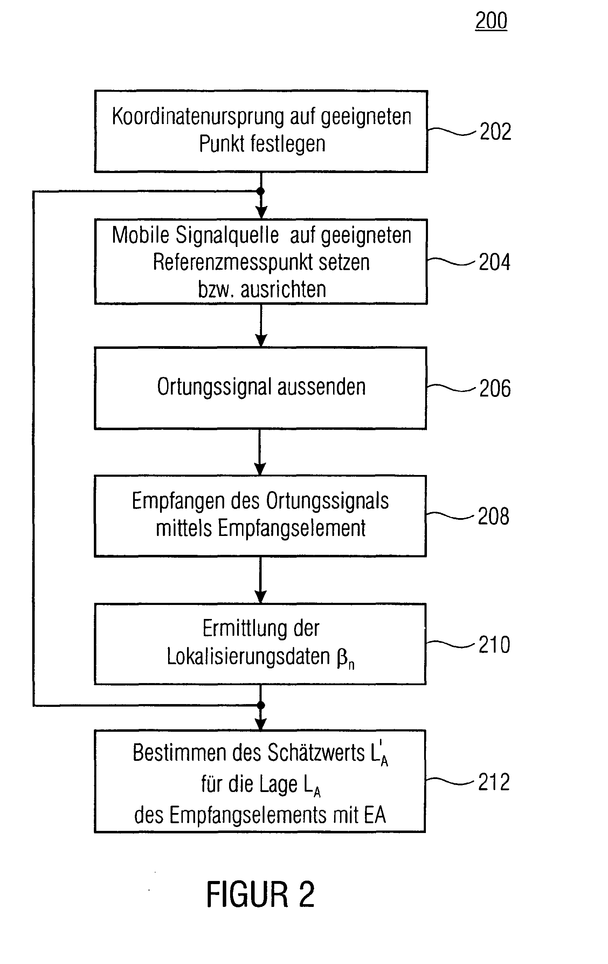

Eine Arbeitsweise des in Fig. 1 schematisch gezeigten erfindungsgemäßen Systems 100 soll im Nachfolgenden anhand des schematischen Ablaufdiagramms 200 in Fig. 2 erläutert werden.

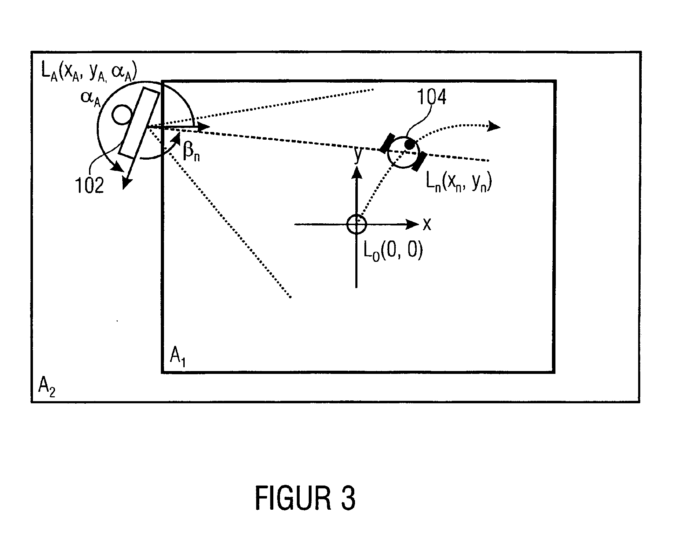

In einem ersten Schritt 202 wird ein Ursprung eines Bezugskoordinatensystems auf einen geeigneten Punkt festgelegt, der im Nachfolgenden als $L_0(0,0)$ bezeichnet wird (siehe Fig. 3).

In einem nächsten Schritt 204 wird die mobile Signalquelle 104 auf einen bekannten ersten Messpunkt gesetzt bzw. ausgerichtet. Dabei kann es sich beispielsweise um den Koordinatenursprung $L_0(0,0)$ handeln.

In einem dritten Schritt 206 wird an dem bekannten ersten Messpunkt von der mobilen Signalquelle 104 ein Ortungssignal ausgesendet. Dabei kann es sich um ein moduliertes oder unmoduliertes Funksignal handeln, welches von dem Empfangselement 102, das sich in der unbekannten absoluten Lage $L_A$ $(x_A, y_A, \alpha_A)$ befindet, in einem Schritt 208 empfangen wird.

In einem Schritt 210 werden seitens des Empfangselements 102, basierend auf dem empfangenen Ortungssignal, Lokalisierungsdaten ermittelt, welche auf eine relative Lage von dem Empfangselement 102 zu der mobilen Signalquelle 104 hindeuten. Wie oben bereits erwähnt wurde, kann es sich bei den Lokalisierungsdaten dabei um einen Einfallswinkel $\beta_n$ oder um Signallaufzeiten handeln. RSSI-Werte (RSSI = Received Signal Strength Indicator) sind als Lokalisierungsdaten ebenfalls zusätzlich oder alternativ einsetzbar. Die Bestimmung eines Signaleinfallswinkels mittels eines Antennenarrays kann beispielsweise durch sogenannter Beamforming-Techniken erfolgen, bei denen komplexe Antennengewichtsfaktoren geeignet eingestellt werden und die aus dem Stand der Technik bekannt sind. Der gemessene n-te Einfallswinkel $\beta_n$ entsprechend der n-ten Messposition $(x_n, y_n)$ wird zusammen mit dieser Messposition $(x_n, y_n)$ an die Schätzvorrichtung 106 übermittelt.

Gemäß Ausführungsbeispielen wird die mobile Signalquelle 104 an wenigstens zwei unterschiedlichen Messpositionen positioniert, um dazu jeweils seitens des Empfangselements 102 Einfallswinkel bestimmen zu können. Das heißt, solange eine Anzahl n von Datensätzen kleiner als N ($N \geq 2$) ist, werden die Schritte 204 bis 210 wiederholt. Dazu kann die mobile Signalquelle 104, d. h. der Roboter, Hindernisse selbständig umfahren, um zum nächsten Messpunkt zu gelangen, währenddessen mittels Odometrie eine Selbstlokalisierung seitens der mobilen Signalquelle durchgeführt wird.

Sind genügend Datensätze bestehend aus Messpunktkoordinaten $(x_n, y_n)$ und Einfallswinkeln $\beta_n$ aufgezeichnet worden, so startet seitens der Vorrichtung 106 zum Schätzen der evolutionäre Algorithmus basierend auf den ihm übermittelten N Datensätzen in einem Schritt 212.

In Situationen, in denen eine analytische Lösung eines Problems unmöglich ist oder in denen aus Effizienzgründen eine Lösung nicht ohne unzumutbaren Aufwand gefunden werden kann, werden oftmals evolutionäre Algorithmen eingesetzt, um die bestmögliche Approximation der Lösung zu finden. Evolutionäre Algorithmen sind an die natürliche Evolution angelehnt und werden häufig benutzt, um Optimierungsprobleme zu lösen. Diese Algorithmen sind auf eine kollektive Anpassung und Lernfähigkeit von sogenannten Individuen gestützt. Wenn im Nachfolgenden von Individuen die Rede ist, so sind damit Schätzwertindividuen I gemeint, welche Schätzwertattribute $x_I$, $y_I$ und $\alpha_I$ aufweisen, die der unbekannten Lage $L_A$ des Empfangselements entsprechen, d. h. $x_A$, $y_A$ und $\alpha_A$.

Die Evolution ist in der Lage, durch Manipulation des Erbgutes selbst komplexe Lebensformen und Organismen an ihre Umwelt- und Lebensbedingungen anzupassen. Sie löst damit ein sehr schwieriges Optimierungsproblem. Die erstaunlichste Eigenschaft der Evolution ist die relative Einfachheit ihrer Vorgehensweise und das zusammenwirken der verschiedenen Steuerungsmechanismen. In einem einfachen Modell lässt sich der durchgeführte Suchprozess auf drei biologische Prinzipien zurückführen: Mutation, Rekombination und Selektion.

Mutation des Erbgutes ist ein ungerichteter Prozess, dessen Sinn einzig in der Erzeugung von Alternativen und Varianten liegt. Aus der Sicht der Optimierungstheorie kommt der Mutation die Aufgabe zu, lokale Optima zu überwinden. Genetisch entspricht dies neuem Erbgut, das in eine Population von Individuen eingeführt wird und deren Diversität erhält.

Rekombination (Crossover) der Erbinformation liegt hinsichtlich ihre Beitrags zur Zielfindung im Rahmen der Evolution zwischen Mutation und Selektion. Die Stellen, an denen ein Crossover zwischen homologen Chromosomen stattfindet, werden zufällig bestimmt. Die eigentliche Rekombination erfolgt aber nicht mehr zufällig. Nahe beieinanderliegende und funktional verbundene Gene werden seltener getrennt als weiter auseinanderliegende Gengruppen. Ein evolutionärer Algorithmus kann ohne Rekombination auskommen (d. h. es gibt eine asexuelle Fortpflanzung der einzelnen Individuen mit nur einem Elternteil Palettenrückgabeoperation Kind), in bestimmten Fällen ist die Anwendung von Rekombination jedoch effizienter.

Selektion ist für die eigentliche Steuerung der Suchrichtung der Evolution zuständig. Sie bestimmt die Richtung, in der sich das Erbgut verändert, indem sie festlegt, welche Phenotypen sich stärker vermehren. Die Selektion wäre demnach, wenn es keine Störungen gäbe, eine deterministische Komponente innerhalb der Evolution. In der Natur wird die Selektion jedoch immer wieder durch meist zufällige Ereignisse gestört. Auch die am besten an ihre Umgebung angepassten Individuen können durch ein Unglück sterben, bevor sie Nachkommen zeugen. Damit würde die genetische Information, die ein Optimum darstellt, verloren gehen. Zwei weitere Einflüsse machen die Selektion zu einem indeterministischen Faktor. Zum einen ist sie keine konstante Größe, da sich die Umwelt und die Lebensbedingungen der Individuen ändern können, zum anderen gibt es eine Rückkopplung zwischen den einzelnen Individuen und ihrer Umgebung. Diese können durch Eingriffe in die Umwelt ihre Selektion beeinflussen.

Algorithmisch kommt der Repräsentation der Individuen eine große Bedeutung zu. Daneben ist eine Bewertungsmethode, auch Fitnessfunktion genannt, essentiell für die Leistung des evolutionären Algorithmus. Die Fitnessfunktion sollte in der Lage sein, die Qualität beliebiger Lösungen möglichst gut abzubilden, da sie das Selektionskriterium bildet und damit die Suchrichtung definiert. Grundregeln sind, dass die optimale Lösung maximal bewertet werden sollte, während ähnliche Lösungen ähnlich bewertet werden sollten. Außerdem helfen möglichst feine Abstufungen zwischen "schlechten" und "guten" Lösungen. Typischerweise ist die Bewertung der rechenintensivste Teil eines evolutionären Algorithmus. In der Regel werden einzelne Individuen unabhängig bewertet, indem sie auf einen reellen Wert abgebildet werden. Je strenger das Bewertungsverfahren und damit die verbundene Selektion arbeiten, desto höher ist ein sogenannter Selektionsdruck. Je höher der Selektionsdruck, desto schneller konvergiert die Population gegen ein Schätzwertoptimum, desto höher ist jedoch auch die Gefahr, dass dies nur ein lokales Optimum ist.

Jedes Schätzwertindividuum I kann also auf zwei verschiedene Weisen dargestellt werden: ein Genotyp ist die Repräsentation des Individuums während einer Variation; ein Phenotyp wird verwendet, um eine so genannte Fitness während der Selektionsphase darzustellen. Eine Mehrzahl von Schätzwertindividuen bildet eine Schätzwertpopulation P und jedes Schätzwertindividuum I repräsentiert eine mögliche Lösung des Problems.

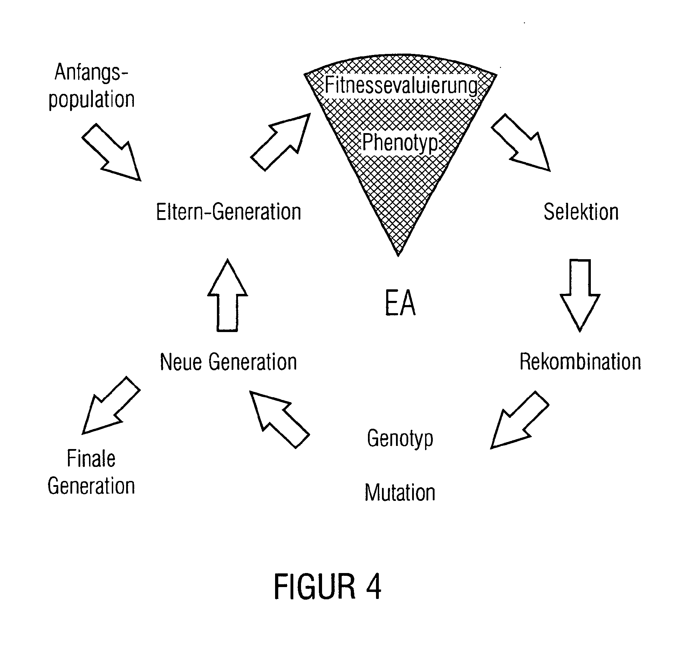

Zu Beginn werden die einzelnen Individuen I der Population bzw. deren Attribute $x_I$, $y_I$ und $\alpha_I$ in einem sinnvollen Ergebnisraum zufällig initialisiert. Sie können durch Operatoren wie Selektion, Mutation und Rekombination geändert werden. Diese Veränderungen führen zur Entwicklung jedes einzelnen Individuums I. Während des Entwicklungsprozesses entstehen immer bessere Individuen. Daher wird die Wahrscheinlichkeit von Individuen, die bessere Lösungen repräsentieren, von Generation zu Generation größer. Der Verlauf eines evolutionären Algorithmus ist schematisch in Fig. 4 dargestellt.

Neben allgemeinen Aspekten des evolutionären Algorithmus müssen bestimmte Aspekte an die spezifische erfindungsgemäße Anwendung angepasst werden. Diese Anpassung ist enorm wichtig für die Effizienz des entsprechenden Systems und für die Qualität der erzielten Resultate:

- Transformation zwischen Phenotyp und Genotyp

- Fitnessbewertung

- Selektionsmechanismus

- Variationsoperatoren und

- Balance aus Selektion und Variation.

Die Grundtypen von evolutionären Algorithmen sind evolutionäre Strategien, genetische Algorithmen und genetische Programmierung.

Ein Ziel von Ausführungsbeispielen der vorliegenden Erfindung ist es, die Konfigurationsparameter eines RTLS zu ermitteln. Das heißt, es soll bestimmt werden, wo sich die Lokalisierungsantennen befinden und in welcher Richtung sie angeordnet sind. Ein RTLS kann eine Position eines drahtlosen Empfängers berechnen, wenn Position und Ausrichtung von zwei oder mehr Antennen bekannt sind (2-D-Fall).

Die Bestimmung der Konfigurationsparameter eines Empfangselements, d. h. also die Lagebestimmung, kann in zwei Phasen unterteilt werden:

1. Messung der Umgebung (Schritte 202 bis 210) und

2. Berechnung der unbekannten Lage (Schritt 212).

Die erste Phase ist unabhängig von der darauffolgenden Berechnungsphase. D. h., die Berechnung kann nachgeschaltet erfolgen.

Während der Messphase steuert der Roboter 104 N Messpunkte $L_n(x_n,y_n)$ an. An diesen Messpunkten $L_n(x_n, y_n)$ werden die Messungen durchgeführt und jeweils ein entsprechender Signaleinfallswinkel $\beta_n$ ermittelt. Der Roboter 104 sendet ständig Ortungssignale für das Lokalisierungssystem über seine WLAN-Schnittstelle aus. Über Beamforming-Techniken seitens des Empfangsantennenarrays 102 kann der Einfallswinkel $\beta_n$ dieser Ortungssignale berechnet werden. Das Ortungssystem sendet den Einfallswinkel $\beta_n$ entweder direkt zu der Schätzvorrichtung 106 oder zurück zu dem Roboter 104, beispielsweise über Ethernet/WLAN. Von dort kann der Roboter 104 den Einfallswinkel $\beta_n$ zusammen mit den Messpunktkoordinaten $(x_n,y_n)$ (n=1,2,...,N) der Schätzvorrichtung 106 zur Verfügung stellen.

Zu Beginn wird der Roboter, d. h. die mobile Signalquelle 104, an einer bekannten Startposition $L_0(0,0)$ mit einer vorbestimmten Orientierung positioniert. Die Messphase wird gestartet und der Roboter 104 empfängt einen ersten Einfallswinkel $\beta_0$ von dem Lokalisierungssystem und speichert ihn zusammen mit der Startposition $L_0(0,0)$ in einer Datenbank. $L_0(0,0)$ ist der erste Messpunkt und sämtliche weitere Koordinaten $L_n(x_n,y_n)$ werden relativ zu dem Start-punkt $L_0(0,0)$ mittels Odometrie von dem Roboter 104 selbst bestimmt. Gemäß Ausführungsbeispielen kann der Start-punkt $L_0(0,0)$ mit dem Koordinatenursprung übereinstimmen, wie es in Fig. 3 gezeigt ist. Im Anschluss daran fährt der Roboter 104 zu einem zufällig gewählten Punkt $L_n(x_n,y_n)$ innerhalb einer vorbestimmten Grenze $(A_1)$. Sobald der Roboter 104 an dem neuen Messpunkt $L_n(x_n,y_n)$ angekommen ist, wird eine neue Messung durchgeführt, und der dazu ermittelte Einfallswinkel $\beta_n$ und die Messpunktkoordinaten des Roboters 104 werden in die Datenbank geschrieben. Dies wird (N-1)-mal wiederholt.

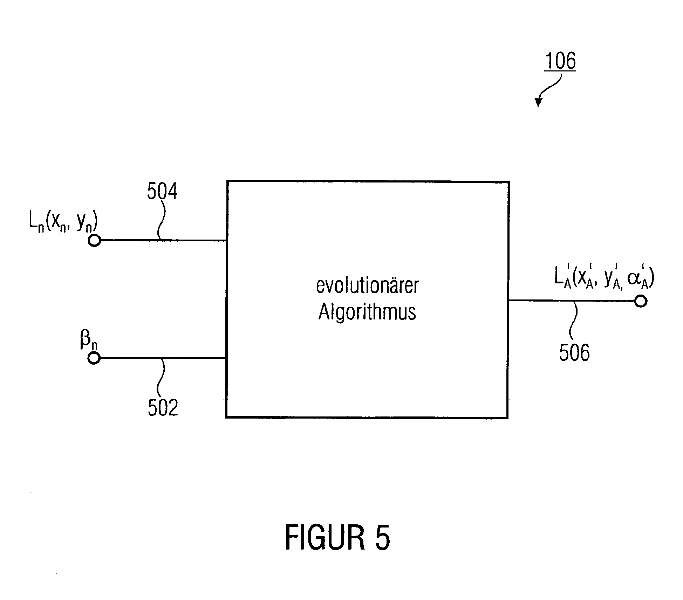

Sobald sämtliche Messdaten gesammelt wurden, kann, basierend darauf, der evolutionäre Algorithmus (EA) gestartet werden. Gemäß einem Ausführungsbeispiel der vorliegenden Erfindung werden dazu die gesammelten Messdaten, d. h. die Einfallswinkel $\beta_n$ und die dazugehörigen Messpositionen $L_n(x_n,y_n)$ (n=1,2,...,N), an die Vorrichtung 106 zum Schätzen, deren schematisches Blockdiagramm in Fig. 5 dargestellt ist, übergeben.

Gemäß einem Ausführungsbeispiel weist die Vorrichtung 106 eine erste Schnittstelle 502 auf, um die Lokali-sierungsdaten $\beta_n$ empfangen zu können. Ferner weist sie eine zweite Schnittstelle 504 auf, um die Messpositionen $L_n(x_n,y_n)$ der beweglichen Signalquelle 104 empfangen zu können. Ausgangsseitig ist eine dritte Schnittstelle 506 vorgesehen, um den Schätzwert $L_A$ für die absolute Lage (Position und Orientierung) des Empfangselements 102 ausgeben zu können. Aus den Eingangssignalen $L_n(x_n,y_n)$, $\beta_n$ werden durch einen evolutionären Algorithmus die Ausgangssignale $L_A'(x_A',y_A',\alpha_A')$ ermittelt. D. h., der evolutionäre Algorithmus verarbeitet die Lokalisierungsdaten $\beta_n$ und die Positionsdaten $L_n(x_n,y_n)$ und gibt ansprechend darauf einen Schätzwert $L_A'(x_A',y_A',\alpha_A')$ für die Position und die Orientierung (siehe Fig. 3) des Empfangselements 102 aus. Zusätzlich kann eine Genauigkeitsinformation bereitgestellt werden, d. h. eine Information darüber, wie akkurat die Schätzung $L_A'$ ist. Dies ist dann möglich, wenn das Gleichungssystem überbestimmt ist, d.h. mehr Messwerte als unbedingt nötig zur Verfügung stehen. Die Genauigkeitsinformation kann dann beispielsweise aus einer Abweichung einer Fitnessfunktion F(I) für jedes Schätzwertindividuum I von einem Maximalwert der Fitnessfunktion bestimmt werden.

Im Nachfolgenden wird detailliert auf ein Ausführungsbeispiel des evolutionären Algorithmus eingegangen.

Jedes Schätzwertindividuum $I(x,y,\alpha)$ wird von Schätzwerten der absoluten Position $x_A$, $y_A$ und der absoluten Orientierung $\alpha_A$ des Empfangselements 102 repräsentiert. $\alpha_A$ wird definiert als ein positiver Winkel zwischen der x-Achse des Bezugskoordinatensystems und einem Null-Grad-Punkt des Empfangselements, gemessen im Bogenmaß. x und y werden beispielhaft in Millimetern gemessen, $\alpha$ in Grad. Die Zahl der Schätzwertindividuen einer Iteration des evolutionären Algorithmus wird als Schätzwertpopulation P bezeichnet.

Eine Fitnessfunktion F(I) für jedes Schätzwertindividuum I wird durch Simulation des Einfallswinkels gemäß

$$\beta_{I,n} = \arctan\left(\frac{\Delta y_n}{\Delta x_n}\right) - \alpha_I \qquad (1)$$

mit

$$\Delta y_n = y_n - y_I \quad \text{und} \quad \Delta x_n = x_n - x_I \qquad (2)$$

berechnet, wobei $(x_n, y_n)$ einem Messpunkt, $(x_I, y_I)$ den individuellen Schätzwert für die Antennenposition und $\alpha_I$ dem individuellen Schätzwert für die Antennenorientierung entsprechen. Die Fitnessfunktion F(I) für ein Schätzwertindividuum I wird erhalten, indem die N simulierten Einfallswinkel $\beta_{I,n}$ mit dem jeweils gemessenen Einfallswinkel verglichen werden, beispielsweise gemäß:

$$F(I) = \sum_n \left( \pi - \left| \beta_{I.n} - \beta_n \right| \right)^2 \qquad (3)$$

In jeder Iteration des evolutionären Algorithmus wird aus P eine Nachfolgepopulation $P_S$ von Schätzwertindividuen ermittelt. Dabei werden neue Schätzwertindividuen durch drei verschiedene Operationen generiert:

a) Selektion,

b) Rekombination, und

c) Mutation.

Für die Selektion wird bei jeder Iteration eine Gruppe überlebender Schätzwertindividuen $P_{sel}$ aus der alten Population P gemäß den folgenden Regeln ausgewählt:

- Behalte das beste Schätzwertindividuum, d. h. das Schätzwertindividuum mit einer der größten Fitness entsprechenden Fitnessfunktion F(I),
- Wähle

$$n = (1 - r) \cdot p - 1 \qquad (4)$$

Schätzwertindividuen, mit einer Wahrscheinlichkeit:

$$\Pr(I) = \frac{F(I)}{\sum_{j=1}^p F(I)} \qquad (5)$$

Dabei bezeichnet r eine Rekombinationsrate und p eine Populationsgröße.

Für die Rekombination werden zusätzlich zu der Gruppe $P_{sel}$

$$n = \frac{r \cdot p}{2} \qquad (6)$$

Paare von Schätzwertindividuen gebildet, indem Schätzwertindividuen der alten Schätzwertpopulation P miteinander gekreuzt werden. Somit erhält man eine Gruppe von gekreuzten Schätzwertindividuen $P_{cross}$. Jedes neue Paar $I_1'$ und $I_2'$ wird dadurch erhalten, indem statistisch zwei Elternteile $I_1$ und $I_2$ der Schätzwertpopulation P nach Gl. 5 ausgewählt werden. Aus $I_1$ und $I_2$ werden zwei Abkömmlinge $I_1'$ und $I_2'$ erhalten und zu der Gruppe $P_{cross}$ hinzugefügt. Ein Abkömmling ist dabei gemäß einem Ausführungsbeispiel ein gewichtetes Mittel seiner Eltern $I_1$ und $I_2$. Dazu wird ein zufälliges Gewicht a [0;1] gewählt. Die Abkömmlinge $I_1'(x_1',y_1',\alpha_1')$ und $I_2'(x_2',y_2',\alpha_2')$ werden dann gemäß

$$x_1' = a \cdot x_1 + b \cdot x_2; \quad x_2' = b \cdot x_1 + a \cdot x_2; \qquad (7)$$

$$y_1' = a \cdot y_1 + b \cdot y_2; \quad y_2' = b \cdot y_1 + a \cdot y_2; \tag{8}$$

$$\alpha_1' = a \cdot \alpha_1 + b \cdot \alpha_2 + \varepsilon \tag{9}$$

$$\alpha_2' = b \cdot \alpha_1 + a \cdot \alpha_2 + \varepsilon \tag{10}$$

mit

$$b = 1 - a \text{ und } \varepsilon \in \left[ -\frac{\pi}{40}; +\frac{\pi}{40} \right]_R . \tag{11}$$

erhalten.

Für das hier beschriebene Ausführungsbeispiel haben Performanztests ergeben, dass ein betragsmäßig kleines bei der Kreuzung von $\alpha$ zu einer schnelleren Konvergenz führt. Eine Auswertung von möglichen guten Werten hat $\pm \pi/40$ als guten Wert ergeben. Für andere Anwendungen, insbesondere für andere Lokalisationsareale, mögen andere Werte für $\varepsilon$ besser geeignet sein.

Die gekreuzte Gruppe $P_{cross}$ und die überlebenden Schätzwertindividuen $P_{sel}$ ergeben zusammen die nachfolgende Schätzwertpopulation $P_S$ mit einer Anzahl von p Individuen.

Im Anschluss daran wird ein vorbestimmter Bruchteil m der nachfolgenden Schätzwertpopulation $P_S$ mutiert. m bezeichnet also eine Mutationsrate. Dabei betrifft eine Mutation lediglich ein zufällig gewähltes Schätzwertattribut x, y oder $\alpha$ eines mutierten Individuums. Im Falle der Schätzwertattribute x oder y sind für das vorliegende Beispiel Werte in einem Mutationsbereichbereich [-100; +100] vorgesehen. Im Falle des Attributs $\alpha$ wird ein Wert in einem Bereich [-$\pi/6$; +$\pi/6$] zu $\alpha$ hinzuaddiert. Der Mutationsbereichbereich für x, y ist im vorliegenden Beispiel ungefähr zu 10 % des Lokalisierungsbereichs gewählt.

Nach dem Mutationsschritt wird die Schätzwertpopulation $P_S$ nun als neue Schätzwertpopulation P bezeichnet, mit der der nächste Iterationsschritt des evolutionären Algorithmus durchgeführt wird. D. h., für jedes Schätzwertindividuum der neuen Schätzwertpopulation P wird wieder eine Fitnessfunktion F(I) bestimmt, wie es im Vorhergehenden beschrieben wurde. Auf dieser Basis erfolgen danach wiederum Selektion, Rekombination und Mutation.

Der evolutionäre Algorithmus bricht ab, wenn die Fitness F des besten Individuums $I_{win}(x,y,\alpha)$ einer Iteration einen vorbestimmten Grenzwert $F_T$ übersteigt bzw. unterschreitet - je nachdem, ob große oder kleine Fitnesswerte für gute Individuen sprechen. Sollte der Grenzwert $F_T$ nicht erreicht werden, so bricht der evolutionäre Algorithmus ebenfalls ab, wenn eine maximale Anzahl von Iterationen überschritten wird. Das beste Individuum $I_{win}(x,y,\alpha)$ repräsentiert dann die geschätzte Antennenlage $L_A'$ mit Position $(x_A',y_A')$ und Orientierung $\alpha_A'$.

Der in den vorhergehenden Abschnitten beschriebene evolutionäre Algorithmus kann mit dem nachfolgenden Pseudocode zusammengefasst werden:

**Eingabe:** Positionen $L_n$ mit entsprechend gemessenem Signaleinfallswinkel $\beta_n$

**Ausgabe:** Lage, d.h. *Position* und *Orientierung,* der Antenne

```
1    P ← Initialisiere()
2    h ← Evaluiere(P)
3    while min(Fitness(h)) > F_T and i < i_max do
4    |    P_sel ← Selektiere(P)
5    |    P_cross ← Rekombiniere(P)
6    |    P_S ← P_sel + P_cross
7    |    P ← Mutiere(P_S)
8    |    h ← Evaluiere(P)
9    |_   i++;
10   return best(h)
```

Der evolutionäre Algorithmus wird hauptsächlich von drei Parametern bestimmt: der Populationsgröße p, der Mutationsrate m und der Rekombinationsrate r. Diese Größen beeinflussen die Leistungsfähigkeit des Algorithmus. Den besten Parametersatz (p, m, r) zu finden, ist ebenfalls ein Optimierungsproblem und hängt von der Zielsetzung des evolutionären Algorithmus ab. Für das vorliegende Beispiel ist das Ziel, einen Parametersatz (p, m, r) zu finden, der in einer vorbestimmten Zeit bzw. mit einem vorbestimmten Rechenaufwand den kleinsten Fehler zwischen Schätzwert $L_A$' und tatsächlichem Wert $L_A$ liefert.

Um den besten Parametersatz für den evolutionären Algorithmus zu finden, wurden Simulationsergebnisse für alle sinnvollen Parametersätze (p, m, r) verglichen. Ein Parametersatz umfasst das Triple (p, r, m), wobei $p \in [5; 80]$ mit einer Schrittweite von fünf Individuen und $r, m \in [0; 100]$ mit einer Schrittweite von 10 %. Die Anzahl aller möglichen Konstellationen ist p x r x m = 16 x 11 x 11 = 1.936 Parametersätze. Für jeden Parametersatz (p, m, r) wurden 30 Szenarien mit einer festen Anzahl von vier statischen Messpunkten $(x_n, y_n)$ (n=1,...,4) und einem simulierten Signalein-fallswinkel $\beta_n$ mit einer Standardabweichung von 2° angenommen. Diese Szenarien umfassen drei verschiedene Antennenlagen $L_A$ und werden für die Zeit von einer Sekunde simuliert. Daraus resultiert ein Simulationsaufwand von x · 30 · 1 Sekunde = 58.080 Sekunden = 16.6 Stunden. Für jeden simulierten Parametersatz wurde der Median des Abstands zwischen der geschätzten Antennenlage $(x_A', y_A', \alpha_A')$ und der tatsächlichen Lage $(x_A, y_A, \alpha_A)$ gemäß

$$D = \sqrt{\left(x_A' - x_A\right)^2 + \left(y_A' - y_A\right)^2 + \left(10 \cdot \left[\alpha_A' - \alpha_A\right]\right)^2} \qquad (12)$$

berechnet. D kann als eine Art Fehlerfunktion betrachtet werden und wird in diesem Zusammenhang als Fehler der geschätzten Antennenlage $L_A$' genutzt. Um eine numerische Repräsentation der Qualität der Ergebnisse zu erhalten, wurde zu D der Einfallswinkelunterschied, gewichtet mit 10, addiert. Der Faktor 10 wurde gewählt, um dem Winkelfehler ungefähr dieselbe Dimension wie x und y zu geben. Eine Einheit der Fehlerfunktion soll im Nachfolgenden mit pt bezeichnet werden. Dabei handelt es sich nicht um eine physikalische, sondern um eine künstlich gewählte Einheit.

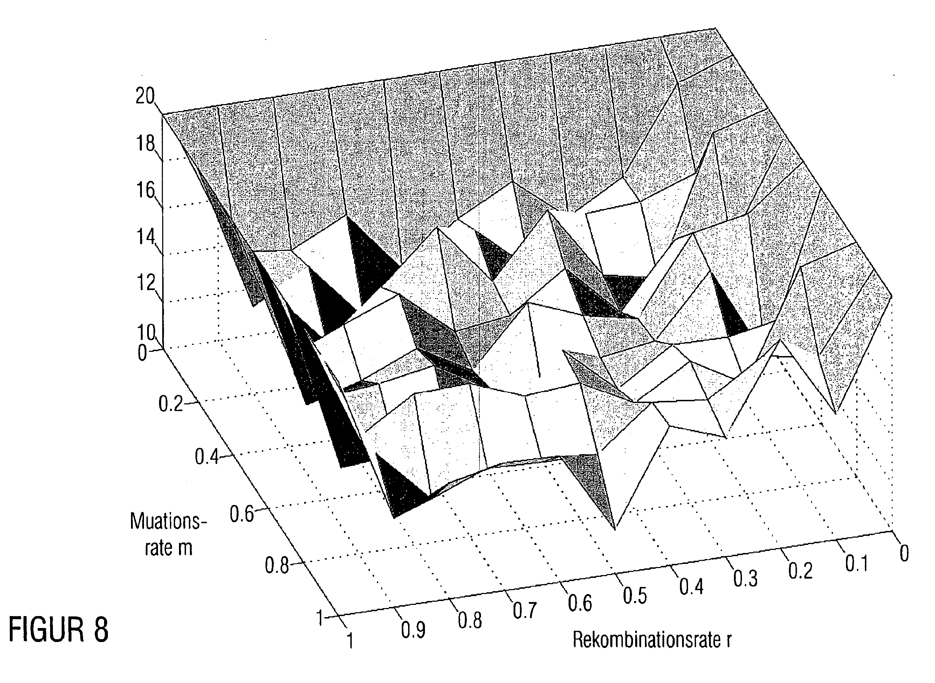

Die Simulationsergebnisse sind in Fig. 8 dargestellt. Der dargestellte dreidimensionale Graph hat sein Minimum bei einer Mutationsrate m = 100 % und einer Rekombinationsrate r = 50 % bei einer Populationgröße p = 65. Die Mutationsrate von m = 100 %, d. h. jedes Schätzwertindividuum wird mutiert, ist überraschend. Eine mögliche Erklärung dafür ist, dass der Suchraum seine Minima nahe seinen Maxima hat.

Wie im Nachfolgenden gezeigt wird, ist der einflussreichste Parameter des erfindungsgemäßen Schätzkonzepts die Anzahl N der verwendeten Messpunkte $(x_n, y_n)$, die von dem Roboter 104 angesteuert werden. Wie es bereits erläutert wurde, bewirkt der Einsatz von Odometrie einen Genauigkeitsverlust über eine zurückgelegte Distanz. Um den Einfluss dieser Fehlerquelle zu minimieren, soll festgestellt werden, welche Anzahl N von unterschiedlichen Messpunkten die besten Ergebnisse liefert. Simuliert wurden drei Durchläufe mit unterschiedlichen Varianzen (0.25°, 1°, 2°) des Einfallswinkels $\beta_n$. Jeder Durchlauf wurde 45 mal mit unterschiedlichen, zufälligen Schätzwertindividuen wiederholt, einmal mit zufälligen und einmal mit statischen Referenzmesspunkten $(x_n, y_n)$ (n=1,...,N).

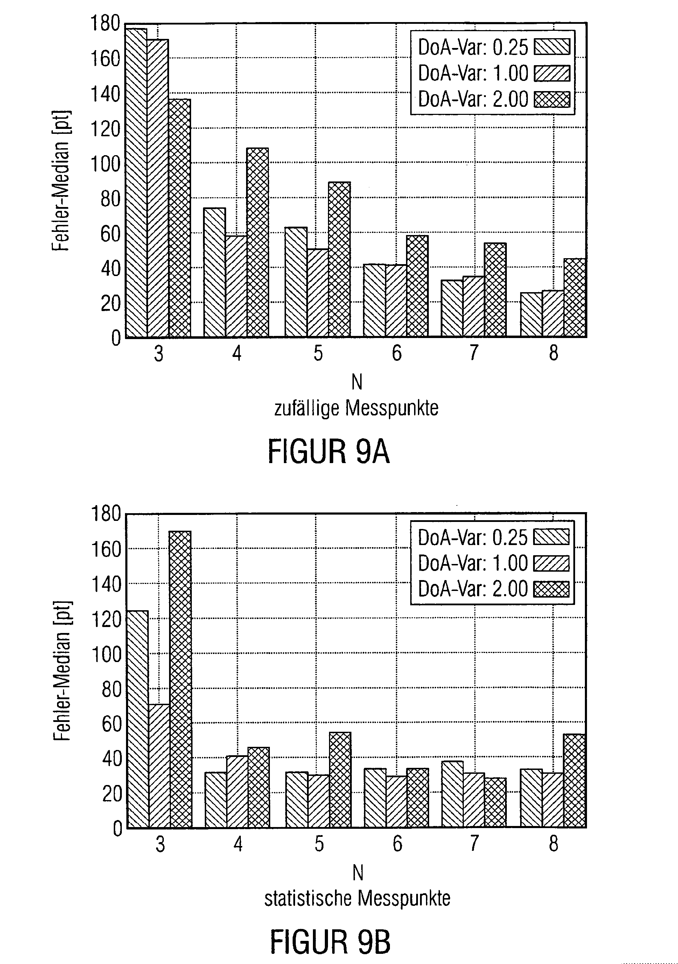

Die Fig. 9a und 9b zeigen den mittleren Fehler für jede der drei Einfallswinkelvarianzen (0.25°, 1°, 2°), aufgetragen über der Zahl N von verwendeten Referenzmessungen. Da vorliegend drei Parameter $(x_A, y_A, \alpha_A)$ zu schätzen sind, werden auch wenigstens N = 3 unterschiedliche Referenzmesspunkte benötigt. Der Fehler wurde gemäß Gl. 12 bestimmt. Während für die Fig. 9a die Referenzmesspunkte zufällig gewählt wurden, wurden für Fig. 9b jeweils dieselben festen Messpunkte verwendet.

In beiden Fällen kann man erkennen, dass der Fehler bei einem Übergang von N = 3 zu N = 4 Messpunkten dramatisch abnimmt und jeweils gegen einen konstanten Fehler konvergiert (ca. 50 pt für zufällige Messpunkte und ca. 25 pt für statische Messpunkte). Die Abnahme des Fehlers von N = 3 auf N = 4 Messpunkte ist durch die Einfügung von Redundanz zu erklären.

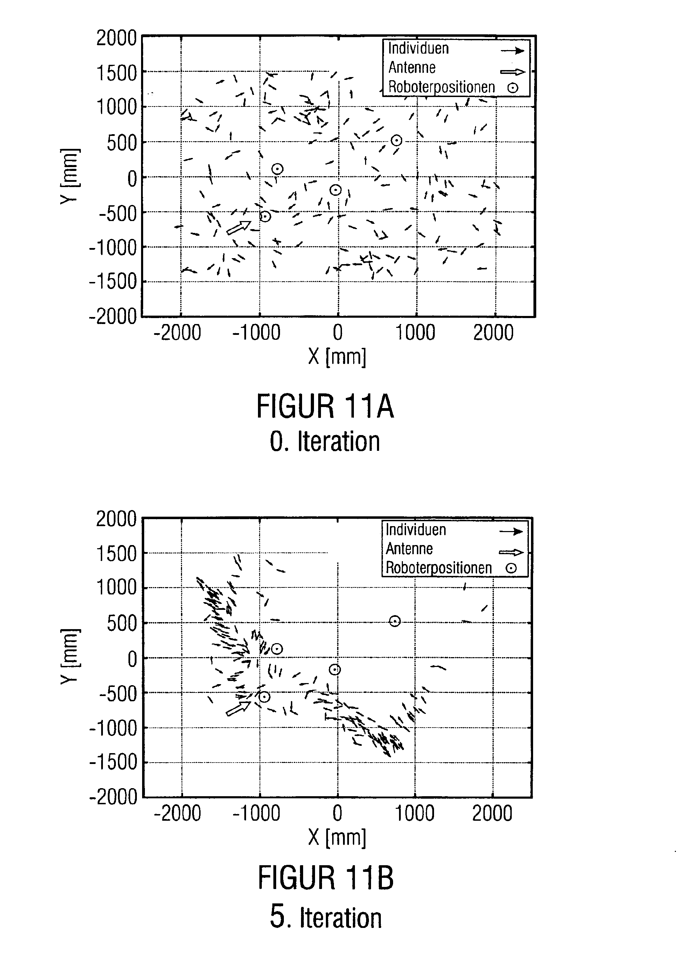

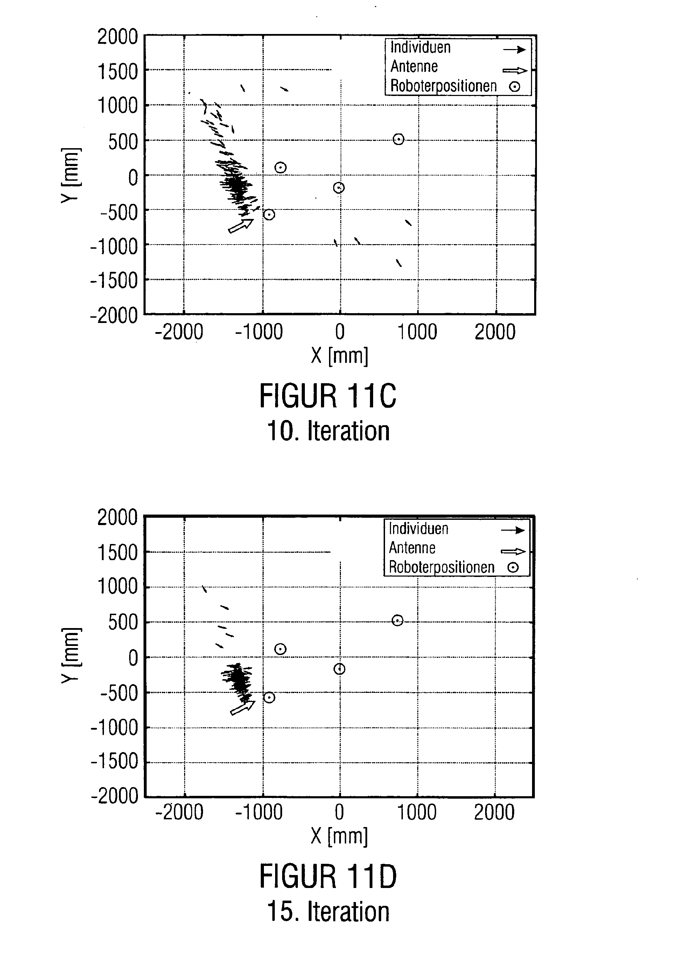

Die Fig. 11a - 11d zeigen einen typischen Iterationsverlauf des erfindungsgemäßen evolutionären Algorithmus mit einem gewissen Rauschen in den Einfallswinkelmessungen $\beta_n$. In der ersten Iteration (Fig. 11a) sind die Schätzwertindividuen bzw. ihre Schätzwertattribute zufällig über einen gesamten berücksichtigen Bereich von 4000 mm x 4000 mm verteilt. Mit einer zunehmenden Anzahl von Iterationsschritten bewegen sich die Schätzwertattribute $(x, y, \alpha)$ der Schätzwertindividuen stetig in Richtung der tatsächlichen Antennenlage $L_A(x_A, y_A, \alpha_A)$ (Fig. 11b und 11c), bis sie nach der 15. Iteration schließlich fast alle in einem relativ engen Toleranzbereich um die tatsächliche Lage $L_A(x_A, y_A, \alpha_A)$ zu liegen kommen. Eine Konvergenz der einzelnen Individuen hin zur tatsächlichen Lage $L_A(x_A, y_A, \alpha_A)$ des Antennenarrays kann eindeutig erkannt werden.

Die bisher gezeigten Simulationsergebnisse wurden auch durch reale Messungen unterstützt. Ein Messaufbau mit beweglichem Roboter 104 und Antennenarray 102 ist in Fig. 7 gezeigt.

Ebenso wie bei den Simulationen wurden zwei Messserien durchgeführt - eine mit statischen Messpunkten und eine mit zufälligen Messpunkten $(x_n, y_n)$ (n=1,..,N). Es wurden Messungen für drei verschiedene Antennenlagen durchgeführt und jede Messung wurde 15 mal wiederholt mit fünf gleich gewählten statischen bzw. zufälligen Messpunktsätzen. Um extensive Messungen zu vermeiden, wurden bei jedem Durchlauf acht Messpunkte (pro Messpunktsatz) berücksichtigt. Danach wurden die Ergebnisse für N Messpunkte (N = [3; 8]) berechnet, indem jeweils die ersten N Messpunkte eines Durchlaufs berücksichtigt wurden.

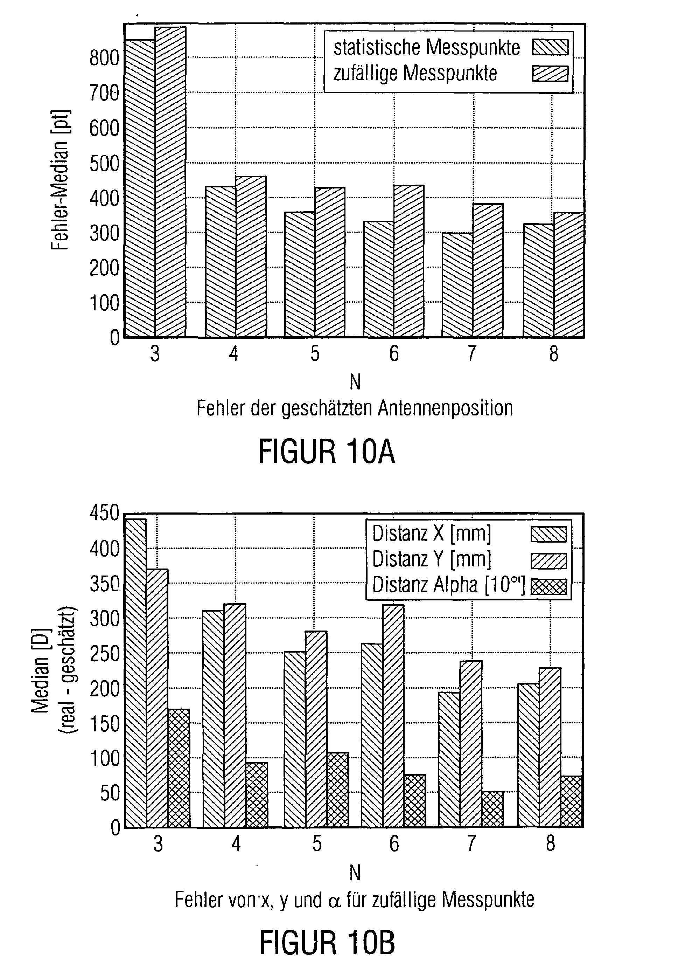

Fig. 10a zeigt den mittleren Fehler der geschätzten Lage für verschiedene Anzahlen N von statischen bzw. zufällig gewählten Messpunkten. Geht man mit der Anzahl N der Messpunkte über einen kritischen Wert (vorliegend N = 7), so kann ein Anstieg des Fehlers beobachtet werden. Dies hängt mit der abnehmenden Genauigkeit der Selbstlokalisierung des Roboters 104 aufgrund der Odometrie zusammen.

Betrachtet man die Fehler der Schätzwertattribute $(x, y, \alpha)$ jeweils einzeln (Fig. 10b), so kann man erkennen, dass x und y jeweils den größten Fehlerbeitrag liefern. In den beschriebenen Experimenten wurde die Orientierung $\alpha_A$ im Mittel bis auf 6° genau bei N = 7 Messpunkten geschätzt.

Bei der Betrachtung der Messergebnisse ist zu berücksichtigen, dass es sich bei dem vorliegenden Konzept um ein neuartiges Konzept in der Erprobungsphase handelt, das durchaus noch Optimierungsspielraum bietet. In jedem Fall konnte gezeigt werden, dass sich das erfindungsgemäße Konzept eignet, um die Lage eines Empfangselements eines Lokalisierungssystems ohne jedwede Vorkenntnis über die Lage des Empfangselements zu schätzen. Das erfindungsgemäße Konzept basiert dabei auf einem evolutionären Algorithmus, der eingesetzt wird, um die Lage des Empfangselements zu bestimmen.

Obwohl die vorliegende Beschreibung lediglich von der Schätzung der Lage nur eines Empfangselements ausging, kann das erfindungsgemäße Konzept natürlich leicht auf die Lageschätzung von mehreren Empfangselementen erweitert werden. In diesem Fall könnten die Messungen für sämtliche Empfangselemente simultan durchgeführt werden. Im Anschluss daran könnte der evolutionäre Algorithmus sequentiell die Lage für jedes der mehreren Empfangselemente bestimmen. Obwohl das erfindungsgemäße Konzept aus Veranschaulichungsgründen lediglich für zwei Dimensionen beschrieben wurde, kann es natürlich ebenso auf drei Dimensionen erweitert werden.

Zusammenfassend betrifft die vorliegende Erfindung ein Konzept zur Initialisierung von infrastrukturbasierten Ortungs- bzw. Lokalisierungssystemen. Ausführungsbeispiele basieren dabei auf einem voll-/teilautonomen Fahrzeug, mittels dessen das Lokalisierungssystem eingemessen wird. Generiert werden Orts- bzw. Lageinformationen der Empfangselemente des Lokalisierungssystems, die zu dessen eigentlichen Funktion notwendig sind. Die Berechnung der Lageinformation kann mittels eines evolutionären Algorithmus durchgeführt werden, der für verschiedene Lokalisierungstechnologien einsetzbar ist. In dem Zusammenhang soll nochmals darauf hingewiesen werden, dass Ausführungsbeispiele der vorliegenden Erfindung nicht auf Lokalisierungsdaten in Form von Einfallswinkeln (AoA) beschränkt sind, sondern ebenso andere Lokalisierungsdaten verwendet werden können, welche auf eine relative Lage von dem Empfangselement zu der bewegbaren Signalquelle hindeuten, wie beispielsweise RSSI-Werte, Signallaufzeiten in Form von ToA, TDoA (Time Difference of Arrival) oder RTT, abhängig von der eingesetzten Lokalisierungstechnologie.

Bei dem beschriebenen Ausführungsbeispiel wurde zur Bestimmung der Fitnessfunktion der Einfallswinkel auf des Empfangselement verwendet, wobei unter Annahme einer Position mit einem geschätzten Winkel $\alpha$ der Winkel $\beta_n'$ mit

$$\beta_n' = \arctan\left(\frac{x_n - x}{y_n - y}\right) - \alpha$$

berechnet werden kann. Die Fitnessfunktion kann dann als quadratischer Fehler von berechnetem zu gemessenem Winkel bei der angenommenen Lage des Empfangselements ermittelt werden:

$$F(I) = \sum \left(\left|\beta_n{}' - \beta_n\right|\right)^2$$

Entsprechend ergibt sich bei optionaler Normierung zwischen 0 und 1 obige Gleichung (3).

Bei Ausführungsbeispielen der Erfindung können die Lokalisierungsdaten eine Signalankunftszeit, aus der ein Abstand zu der Signalquelle ermittelbar ist, aufweisen, wobei die Fitnessfunktion dann auf der Basis solcher Lokalisierungsdaten ermittelt wird. Die Ankunftszeit kann eine Ankunftszeit der Signale an dem Empfangselement oder eine Round-Trip-Zeit, zu der die Signale wieder an dem Signalquelle ankommen, sein. Die Lokalisierungsdaten können somit auf eine Distanz $d_n$, also einen gemessenen Abstand zum Messpunkt reduziert werden. Zur Bestimmung der Fitnessfunktion wird wieder eine geschätzte Position verwendet, so dass ein berechneter Abstand $d_n'$ wie folgt berechnet werden kann:

$$d_n = \sqrt{(x_n - x)^2 + (y_n - y)^2}$$

Die Fitnessfunktion ist somit der quadratische Fehler von berechneter zu gemessener Distanz bei geschätzter, d.h. angenommener, Lage des Empfangselements. Der Fitnessfunktion kann somit berechnet werden zu:

$$F(I) = \sum_n \left(d_n{}' - d_n\right)^2$$

Die beste Fitness ist wiederum min(F(I)).

Allgemein ausgedrückt kann bei Ausführungsbeispielen der Erfindung eine Fitnessfunktion bestimmt werden, indem Lokalisierungsdaten entsprechend einem Lokalisierungsverfahren erfasst bzw. berechnet werden, die über einen quadratischen Fehler mit einer angenommen bzw. geschätzten Lage bzw. Position zugeordneten Daten verglichen werden. Es können auch mehrere der beschriebenen Lokalisierungsdaten in die Fitnessfunktion eingehen, wobei die einzelnen Fitnessfunktionen addiert werden können, z.B. $F(I) = F_{AOA}(I) + F_{RTT}(I)$.

Wie beschrieben wurde, können bei Ausführungsbeispielen AoA (das manchmal auch als DoA (direction of arrival) bezeichnet wird), ToA, TDoA (Time Difference of Arrival) oder RTT als Lokalisierungsdaten verwendet werden. Bei TDoA können dabei mehrere Empfangselemente impliziert werden, deren Positionen parallel in die Fitnessfunktion eingehen.

Abhängig von den Gegebenheiten kann das erfindungsgemäße Verfahren zum Bestimmen eines Schätzwerts für eine absolute Lage eines Empfangselements in Hardware oder in Software implementiert werden. Die Implementierung kann auf einem digitalen Speichermedium, insbesondere einer Diskette, CD oder DVD mit elektronisch auslesbaren Steuersignalen erfolgen, die so mit einem programmierbaren Computersystem zusammenwirken können, dass das erfindungsgemäße Verfahren ausgeführt wird. Allgemein besteht die Erfindung somit auch in einem Computerprogrammprodukt mit einem auf einem maschinenlesbaren Träger gespeicherten Programmcode zur Durchführung des erfindungsgemäßen Verfahrens, wenn das Computerprogrammprodukt auf einem Rechner abläuft. Mit anderen Worten ausgedrückt kann die Erfindung somit als ein Computerprogramm mit einem Programmcode zur Durchführung des Verfahrens realisiert werden, wenn das Computerprogramm auf einem Computer abläuft.

**Patentansprüche**

1. Vorrichtung (106) zum Bestimmen eines Schätzwerts ($L_A'$) für eine Lage ($L_A$) eines Empfangselements (102) in einem Bezugssystem, das Signale einer an verschiedene Messpositionen bewegbaren Signalquelle (104) empfangen kann, wobei Lokalisierungsdaten ($\beta_n$) basierend auf den empfangenen Signalen gemessen werden können, welche auf eine relative Lage von dem Empfangselement (102) zu der bewegbaren Signalquelle (102) hindeuten, wobei die Vorrichtung (106) ausgebildet ist, um den Schätzwert ($L_A'$) basierend auf wenigstens zwei unterschied-

lichen Messpositionen $(x_n; y_n)$ und dazu entsprechenden Lokalisierungsdaten vermittels eines evolutionären Algorithmus zu bestimmen,

wobei die Vorrichtung ausgebildet ist, um den Schätzwert $(L_A')$ iterativ, basierend auf einer Mehrzahl von Schätzwertindividuen (I) mit Schätzwertattributen $(x; y; \alpha)$ für die Lage $(L_A)$ des Empfangselements zu ermitteln, wobei die Mehrzahl der Schätzwertindividuen eine Schätzwertpopulation (P) bilden,

wobei die Vorrichtung ausgebildet ist, um für jedes der Mehrzahl der Schätzwertindividuen in jeder Iteration eine Fitnessfunktion (F(I)) zu bilden, die auf den gemessenen Lokalisierungsdaten $(\beta_n)$ und entsprechenden Messpositionen $(x_n; y_n)$ der Signalquelle (104) basiert, wobei für jedes Schätzwertindividuum (I) basierend auf den wenigstens zwei unterschiedlichen Messpositionen $(x_n; y_n)$ und einem Schätzwert $(x_I; y_I; \alpha_I)$ für die Lage des Empfangselements (102) ein Schätzwert $(\beta_{I,n})$ für entsprechende Lokalisierungsdaten ermittelt wird, so dass die Fitnessfunktion (F(I)) für jedes Schätzwertindividuum (I) angibt, wie groß eine Abweichung der durch einen individuellen Schätzwert $(L_I)$ für die Lage des Empfangselements (102) erhaltenen wenigstens zwei Schätzwerte $(\beta_{I,n})$ für die Lokalisierungsdaten von wenigstens zwei gemessenen Lokalisierungsdaten $(\beta_n)$ ist, und

wobei die Lokalisierungsdaten einen Einfallswinkel $(\beta_n)$ der empfangenen Signale auf das Empfangselement (102) und/oder eine Signalankunftszeit, aus der ein Abstand zu der Signalquelle ermittelbar ist, aufweisen.

2. Vorrichtung nach Anspruch 1, wobei die wenigstens zwei gemessenen Lokalisierungsdaten $(\beta_n)$ jeweils einem gemessenen Signaleinfallswinkel von einer Messposition $(x_n; y_n)$ der bewegbaren Signalquelle (104) auf das Empfangselement (102) entsprechen.

3. Vorrichtung nach Anspruch 2, die ausgebildet ist, um für jeden der Mehrzahl der Schätzwertindividuen (I) einen geschätzten Signaleinfallswinkel gemäß

$$\beta_{I,n} = \arctan(\Delta y_n / \Delta x_n) - \alpha_I$$

bzgl. der wenigstens zwei Messpositionen $(x_n; y_n)$ der bewegbaren Signalquelle zu ermitteln, wobei $\Delta y_n = y_n - y_I$, $\Delta x_n = x_n - x_I$, und $L_I(x_I; y_I; \alpha_I)$ den I-ten individuellen Schätzwert für die Position $(x_I; y_I)$ und Orientierung $(\alpha_I)$ des Empfangselements (102) bedeutet und, wobei die Vorrichtung (106) ausgebildet ist, um für jeden der Mehrzahl der Schätzwertindividuen die Fitnessfunktion gemäß

$$F(I) = \sum_n (\pi - |\beta_{I,n} - \beta_n|)^2$$

zu bestimmen, wobei $\beta_n$ den gemessenen Signaleinfallswinkel von der n-ten Messposition $(x_n; y_n)$ der bewegbaren Signalquelle (104) bedeutet.

4. Vorrichtung nach einem der Ansprüche 1 bis 3, die ausgebildet ist, um in jedem Iterationsschritt aus einer aktuellen Schätzwertpopulation (P) eine nachfolgende Schätzwertpopulation $(P_S)$ aus einer Gruppe von überlebenden Schätzwertindividuen $(P_{sel})$ und einer Gruppe von gekreuzten Schätzwertindividuen $(P_{cross})$, die durch Kreuzung von ausgewählten aktuellen Schätzwertindividuen erzeugt wird, zu bilden.

5. Vorrichtung nach Anspruch 4, die ausgebildet ist, um die Gruppe von überlebenden Schätzwertindividuen $(P_{sel})$ gemäß folgender Vorschrift zu bestimmen:

- Behalte das Schätzwertindividuum mit einer der größten Fitness entsprechenden Fitnessfunktion;
- Ermittle $n = (1 - r) \cdot p - 1$ Schätzwertindividuen mit einer Wahrscheinlichkeit

$$\Pr(I) = F(I) / \sum_{j=1}^{P} F(I),$$

wobei r einer Rekombinationsrate, p einer Zahl von Schätzwertindividuen der Schätzwertpopulation und F(I) einer Fitnessfunktion für jedes Schätzwertindividuum (I) entspricht, die angibt, wie groß eine Abweichung der durch einen individuellen Schätzwert ($L_I$) für die Lage des Empfangselements (102) erhaltenen wenigstens zwei Schätzwerte ($\beta_{I,n}$) für die Lokalisierungsdaten von den wenigstens zwei gemessenen Lokalisierungsdaten ($\beta_n$) ist.

6. Vorrichtung nach Anspruch 4 oder 5, die ausgebildet ist, um n = r*p/2 Paare von Schätzwertindividuen durch Kreuzung von. Schätzwertattributen aktueller Schätzwertindividuen, die basierend auf $Pr(I) = F(I)/\Sigma_{j=1}^P F(I)$ ausgewählt werden, zu erhalten, um die gekreuzte Gruppe von Schätzwertindividuen ($P_{cross}$) zu bilden.

7. Vorrichtung nach einem der Ansprüche 4 bis 6, die ausgebildet ist, um ein Paar ($I_1'(x_1';y_1';\alpha_1')$; $I_2'(x_2';y_2';\alpha_2')$) der nachkommenden Gruppe von Schätzwertindividuen ($P_{cross}$) aus einem Paar ($I_1(x_1;y_1;\alpha_1)$; $I_2(x_2;y_2;\alpha_2)$) der aktuellen Schätzwertpopulation gemäß

$$x_1' = ax_1 + bx_2; \qquad y_1' = ay_1 + by_2;$$
$$x_2' = bx_1 + ax_2; \qquad y_1' = by_1 + ay_2;$$
$$\alpha_1' = a\alpha_1 + b\alpha_2 + \varepsilon; \quad \alpha_2' = b\alpha_1 + a\alpha_2 + \varepsilon;$$

mit $a \in [0;1]$, $b = 1-a$ und $\varepsilon \in [-\pi/x;+\pi/x]$, wobei $x \in [1;100]$, zu bilden.

8. Vorrichtung nach einem der Ansprüche 4 bis 7, die ausgebildet ist, um einen vordefinierten Bruchteil (m) der nachfolgenden Schätzwertpopulation ($P_S$) einer Mutation zu unterziehen, indem eines der Schätzattribute ($x$; $y$; $\alpha$) in einem jeweils vordefinierten Bereich geändert wird.

9. Vorrichtung nach einem der vorhergehenden Ansprüche, die ausgebildet ist, um Iterationen des evolutionären Algorithmus abzubrechen und den Schätzwert ($L_A'$) für die Lage des Empfangselements (102) auszugeben, sobald eine Fitness (F(I)) eines Schätzwertindividuums (I) mit einer der größten Fitness entsprechenden Fitnessfunktion einen vordefinierten Grenzwert ($F_T$) überschreitet.

10. Vorrichtung nach einem der vorhergehenden Ansprüche, wobei die Lage ($L_A$) eine Position ($x_A$; $y_A$) und eine Orientierung ($\alpha_A$) des Empfangselements (102) in einem Bezugskoordinatensystem umfasst.

11. Vorrichtung nach einem der vorhergehenden Ansprüche, wobei die Signale elektromagnetische Signale sind.

12. Vorrichtung nach einem der vorhergehenden Ansprüche, wobei das Empfangselement (102) eine Antenne zum Empfangen der elektromagnetischen Signale umfasst.

13. Vorrichtung nach Anspruch 12, wobei das Empfangselement (102) einen Antennenarray mit wenigstens zwei Antennenelementen umfasst.

14. System (100), mit
einem Empfangselement (102) in einer Lage ($L_A$) in einem Bezugssystem;
einer an verschiedene Messpositionen ($x_n$; $y_n$) bewegbaren Signalquelle (104), die Signale aussenden kann, die von dem Empfangselement (102) empfangen werden können, worauf basierend Lokalisierungsdaten ($\beta_n$) ermittelt werden können, welche auf eine relative Lage von dem Empfangselement (102) zu der bewegbaren Signalquelle (104) hindeuten; und
einer Vorrichtung (106) zum Bestimmen eines Schätzwerts ($L_A'$) für die Lage ($L_A$) des Empfangselements (102) gemäß einem der Ansprüche 1 bis 13.

15. Verfahren zum Bestimmen eines Schätzwerts ($L_A'$) für eine Lage ($L_A$) eines Empfangselements (102) in einem Bezugssystem, mit folgenden Schritten:

Aussenden eines Signals an einer bekannten Messposition ($x_n$; $y_n$) mittels einer bewegbaren Signalquelle (104);
Empfangen des Signals mittels des Empfangselements (102);
Ermitteln, basierend auf dem empfangenen Signal, von Lokalisierungsdaten ($\beta_n$), welche auf eine relative Lage von dem Empfangselement (102) zu der bewegbaren Signalquelle (104) hindeuten;
Bestimmen des Schätzwerts ($L_A'$) basierend auf wenigstens zwei unterschiedlichen Messpositionen ($x_n$; $y_n$) der Signalquelle (104) und dazu entsprechenden Lokalisierungsdaten ($\beta_n$) vermittels eines heuristischen Ver-

fahrens,
wobei der Schätzwert (L$_A$') iterativ, basierend auf einer Mehrzahl von Schätzwertindividuen (I) mit Schätzwertattributen (x;y;$\alpha$) für die Lage (L$_A$) des Empfangselements ermittelt wird, wobei die Mehrzahl der Schätzwertindividuen eine Schätzwertpopulation (P) bilden,
wobei für jedes der Mehrzahl der Schätzwertindividuen in jeder Iteration eine Fitnessfunktion (F(I)) gebildet wird, die auf den gemessenen Lokalisierungsdaten ($\beta_n$) und entsprechenden Messpositionen (x$_n$; y$_n$) der Signalquelle (104) basiert, wobei für jedes Schätzwertindividuum (I) basierend auf den wenigstens zwei unterschiedlichen Messpositionen (x$_n$; y$_n$) und einem Schätzwert (x$_I$; y$_I$; $\alpha_I$) für die Lage des Empfangselements (102) ein Schätzwert ($\beta_{I,n}$) für entsprechende Lokalisierungsdaten ermittelt wird, so dass die Fitnessfunktion (F(I)) für jedes Schätzwertindividuum (I) angibt, wie groß eine Abweichung der durch einen individuellen Schätzwert (L$_I$) für die Lage des Empfangselements (102) erhaltenen wenigstens zwei Schätzwerte ($\beta_{I,n}$) für die Lokalisierungsdaten von wenigstens zwei gemessenen Lokalisierungsdaten ($\beta_n$) ist, und
wobei die Lokalisierungsdaten einen Einfallswinkel ($\beta_n$) der empfangenen Signale auf das Empfangselement (102) und/oder eine Signalankunftszeit, aus der ein Abstand zu der Signalquelle ermittelbar ist, aufweisen.

16. Computerprogramm zur Durchführung des Verfahrens nach Anspruch 15, wenn das Computerprogramm auf einem Computer und/oder Mikrocontroller abläuft.

**Claims**

1. Apparatus (106) for determining an estimated value (L$_A$') for a location (L$_A$) of a receiving element (102) within a reference system which may receive signals of a signal source (104) movable to different measuring positions, it being possible to measure - on the basis of the signals received - localization data ($\beta_n$) which indicate a relative location of the receiving element (102) with respect to the movable signal source (102), the apparatus (106) being configured to determine the estimated value (L$_A$') on the basis of at least two different measuring positions (x$_n$; y$_n$) and localization data corresponding thereto by means of an evolutionary algorithm,
the apparatus being configured to iteratively determine the estimated value (L$_A$') on the basis of a plurality of estimated-value individuals (I) having estimated-value attributes (x;y;$\alpha$,) for the location (L$_A$) of the receiving element,
the plurality of the estimated-value individuals forming an estimated-value population (P),
the apparatus being configured to form, for each of the plurality of the estimated-value individuals in each iteration, a fitness function (F(I)) based on the localization data ($\beta_n$) measured and on corresponding measuring positions (x$_n$; y$_n$) of the signal source (104), an estimated-value ($\beta_{I,n}$) being determined for corresponding localization data for each estimated-value individual (I) on the basis of the at least two different measuring positions (x$_n$; y$_n$) and of an estimated value (x$_I$; y$_I$; $\alpha_I$) for the location of the receiving element (102), so that the fitness function (F(I)) for each estimated-value individual (I) indicates the amount of deviation of the at least two estimated values ($\beta_{I,n}$) for the localization data, said estimated values ($\beta_{I,n}$) having been obtained by an individual estimated value (L$_I$) for the location of the receiving element (102), from at least two measured localization data ($\beta_n$), and
the localization data comprising an angle of arrival ($\beta_n$) of the received signals on the receiving element (102) and/or a signal arrival time from which a distance from the signal source may be determined.

2. Apparatus as claimed in claim 1, wherein the at least two measured localization data ($\beta_n$) each correspond to a measured signal arrival angle of a measuring position (x$_n$; y$_n$) of the moveable signal source (104) on the receiving element (102).

3. The apparatus as claimed in claim 2, configured to determine, for each of the plurality of the estimated-value individuals (I), an estimated signal angle of arrival in accordance with

$$\beta_{I,n} = \arctan(\Delta y_n / \Delta x_n) - \alpha_I$$

with regard to the at least two measuring positions (x$_n$;y$_n$) of the movable signal source, wherein $\Delta y_n = y_n - y_I$, $\Delta x_n = x_n - x_I$, and L$_I$(x$_I$; y$_I$; $\alpha_I$) signifies the I$^{th}$ individual estimated value for the position (x$_I$; y$_I$) and orientation ($\alpha_I$) of the receiving element (102), and the apparatus (106) being configured to determine, for each of the plurality of the estimated-value individuals, the fitness function in accordance with

$$F(I) = \sum_n (\pi - |\beta_{I,n} - \beta_n|)^2,$$

wherein $\beta_n$ signifies the measured signal arrival angle from the $n^{th}$ measuring position $(x_n;y_n)$ of the movable signal source (104).

4. Apparatus as claimed in any of claims 1 to 3, configured to form, in each iteration step, from a current estimated-value population (P) a subsequent estimated-value population $(P_S)$ from a group of surviving estimated-value individuals $(P_{sel})$ and a group of cross-bred estimated-value individuals $(P_{cross})$, which is created by cross-breeding selected current estimated-value individuals.

5. Apparatus as claimed in claim 4, configured to determine the group of surviving estimated-value individuals $(P_{sel})$ in accordance with the following specification:

   - keep the estimated-value individual having a fitness function which corresponds to the highest fitness;
   - determine n = (1 - r)*p-1 estimated-value individuals with a probability of

$$Pr(I) = F(I)/\sum_{j=1}^{P} F(I),$$

   wherein r corresponds to a recombination rate, p to a number of estimated-value individuals of the estimated-value population, and F(I) to a fitness function for each estimated-value individual (I) which indicates the amount of deviation of the at least two estimated values $(\beta_{I,n})$ for the localization data, said estimated values $(\beta_{I,n})$ having been obtained by an individual estimated value $(L_I)$ for the location of the receiving element (102), from the at least two measured localization data $(\beta_n)$.

6. Apparatus as claimed in claims 4 or 5, configured to obtain n = r*p/2 pairs of estimated-value individuals by cross-breeding estimated-value attributes of current estimated-value individuals that are selected based on $Pr(I) = F(I)/\Sigma_{j=1}^{P} F(I)$ so as to form the cross-bred group of estimated-value individuals $(P_{cross})$.

7. Apparatus as claimed in any of claims 4 to 6, configured to form a pair $(I_1'(x_1';y_1';\alpha_1'); I_2'(x_2';y_2';\alpha_2'))$ of the descendant group of estimated-value individuals $(P_{cross})$ from a pair $(I_1(x_1;y_1;\alpha_1); I_2(x_2;y_2;\alpha_2))$ of the current estimated-value population in accordance with

$$x_1' = ax_1 + bx_2; \qquad y_1' = ay_1 + by_2;$$
$$x_2' = bx_1 + ax_2; \qquad y_1' = by_1 + ay_2;$$
$$\alpha_1' = a\alpha_1 + b\alpha_2 + \varepsilon; \quad \alpha_2' = b\alpha_1 + a\alpha_2 + \varepsilon;$$

with $a \in [0;1]$, b = 1 - a and $\varepsilon \in [-\pi/x;+\pi/x]$, wherein $x \in [1;100]$.

8. Apparatus as claimed in any of claims 4 to 7, configured to subject a predefined fraction (m) of the subsequent estimated-value population $(P_S)$ to a mutation in that one of the estimated attributes $(x; y; \alpha)$ is changed within a respectively predefined range.

9. Apparatus as claimed in any of the previous claims, configured to terminate iterations of the evolutionary algorithm and to output the estimated value $(L_A')$ for the location of the receiving element (102) as soon as a fitness (F(I)) of an estimated-value individual (I) having a fitness function which corresponds to the highest fitness exceeds a predefined limiting value $(F_T)$.

10. Apparatus as claimed in any of the previous claims, wherein the location $(L_A)$ includes a position $(x_A; y_A)$ and an orientation $(\alpha_A)$ of the receiving element (102) within a reference coordinate system.

**11.** Apparatus as claimed in any of the previous claims, wherein the signals are electromagnetic signals.

**12.** Apparatus as claimed in any of the previous claims, wherein the receiving element (102) includes an antenna for receiving the electromagnetic signals.

**13.** Apparatus as claimed in claim 12, wherein the receiving element (102) includes an antenna array having at least two antenna elements.

**14.** System (100) comprising
a receiving element (102) at a location ($L_A$) within a reference system;
a signal source (104) that is movable to different measuring positions ($x_n$; $y_n$) and which may send out signals that can be received by the receiving element (102), on which basis localization data ($\beta_n$) may be determined which indicate a relative location of the receiving element (102) with respect to the movable signal source (104); and
an apparatus (106) for determining an estimated value ($L_A$') for the location ($L_A$) of the receiving element (102) in accordance with any of claims 1 to 13.

**15.** Method of determining an estimated value ($L_A$') for a location ($L_A$) of a receiving element (102) within a reference system, comprising:

sending out a signal at a known measuring position ($x_n$; $y_n$) by means of a movable signal source (104);
receiving the signal by means of the receiving element (102);
determining, on the basis of the signal received, localization data ($\beta_n$) which indicate a relative location of the receiving element (102) with respect to the movable signal source (104);
determining the estimated value ($L_A$') on the basis of at least two different measuring positions ($x_n$; $y_n$) of the signal source (104) and of localization data ($\beta_n$) corresponding thereto by means of a heuristic method,
the estimated value ($L_A$') being iteratively determined on the basis of a plurality of estimated-value individuals (I) having estimated-value attributes ($x;y;\alpha$) for the location ($L_A$) of the receiving element, the plurality of the estimated-value individuals forming an estimated-value population (P),
a fitness function (F(I)) being formed, for each of the plurality of the estimated-value individuals in each iteration, said fitness function (F(I)) being based on the localization data ($\beta_n$) measured and on corresponding measuring positions ($x_n$; $y_n$) of the signal source (104), an estimated-value ($\beta_{I,n}$) being determined for corresponding localization data for each estimated-value individual (I) on the basis of the at least two different measuring positions ($x_n$; $y_n$) and of an estimated value ($x_I$; $y_I$; $\alpha_I$) for the location of the receiving element (102), so that the fitness function (F(I)) for each estimated-value individual (I) indicates the amount of deviation of the at least two estimated values ($\beta_{I,n}$) for the localization data, said estimated values ($\beta_{I,n}$) having been obtained by an individual estimated value ($L_I$) for the location of the receiving element (102), from at least two measured localization data ($\beta_n$), and the localization data comprising an angle of arrival ($\beta_n$) of the received signals on the receiving element (102) and/or a signal arrival time from which a distance from the signal source may be determined.

**16.** Computer program for performing the method as claimed in claim 15, when the computer program runs on a computer and/or microcontroller.

**Revendications**

**1.** Dispositif (106) pour déterminer une valeur estimée ($L_A$') pour un emplacement ($L_A$) d'un élément de réception (102) dans un système de référence pouvant recevoir des signaux d'une source de signal (104) pouvant se déplacer à des positions de mesure différentes, les données de localisation ($\beta_n$) pouvant être mesurées sur base des signaux reçus qui indiquent un emplacement relatif de l'élément de réception (102) à la source de signal (102) pouvant se déplacer, le dispositif (106) étant réalisé pour déterminer la valeur estimée ($L_A$') sur base d'au moins deux positions de mesure différentes ($x_n$; $y_n$) et les données de localisation correspondantes à l'aide d'un algorithme évolutif, le dispositif étant réalisé pour déterminer la valeur estimée ($L_A$') de manière itérative sur base d'une pluralité d'individus à valeur estimée (I) avec les attributs de valeur estimée ($x$; $y$; $\alpha$) pour l'emplacement ($L_A$) de l'élément de réception, la pluralité d'individus à valeur estimée formant une population à valeur estimée (P),
le dispositif étant réalisé pour former pour chacun de la pluralité d'individus à valeur estimée dans chaque itération, une fonction d'aptitude (F(I)) basée sur les données de localisation mesurées ($\beta_n$) et les positions de mesure correspondantes ($x_n$; $y_n$) de la source de signal (104), pour chaque individu à valeur estimée (I) étant déterminée, sur base des au moins deux positions de mesure différentes ($x_n$; $y_n$) et d'une valeur estimée ($x_I$; $y_I$; $\alpha_I$) pour l'em-

placement de l'élément de réception (102), une valeur estimée ($\beta_{I,n}$) pour les données de localisation correspondantes, de sorte que la fonction d'aptitude (F(I)) pour chaque individu à valeur estimée (I) indique la grandeur d'une déviation des au moins deux valeur estimées ($\beta_{I,n}$), obtenues par une valeur estimée individuelle ($L_I$) pour l'emplacement de l'élément de réception (102), pour les données de localisation d'au moins deux données de localisation mesurées ($\beta_n$), et
les données de localisation présentant un angle d'incidence ($\beta_n$) des signaux reçus sur l'élément de réception (102) et/ou un temps d'arrivée de signal à partir duquel peut être déterminée une distance par rapport à la source de signal.

2. Dispositif selon la revendication 1, dans lesquels au moins deux données de localisation mesurées ($\beta_n$) correspondent, chacune, à un angle d'incidence de signal mesuré d'une position de mesure ($x_n$; $y_n$) de la source de signal (104) pouvant se déplacer sur l'élément de réception (102).

3. Dispositif selon la revendication 2, qui est réalisé pour déterminer, pour chacun de la pluralité d'individus à valeur estimée (I), un angle d'incidence de signal estimé selon

$$\beta_{I,n} = \arctan \left( \Delta y_n / \Delta x_n \right) - \alpha_I$$

ou des au moins deux positions de mesure ($x_n$; $y_n$) de la source de signal pouvant se déplacer, où $\Delta y_n = y_n - y_I$, $\Delta x_n = x_n - x_I$, et $L_I$ ($x_I$; $y_I$; $\alpha_I$) signifie la I-ième valeur estimée individuelle pour la position ($x_I$; $y_I$) et l'orientation ($\alpha_I$) de l'élément de réception (102), le dispositif (106) étant réalisé pour déterminer, pour chacun de la pluralité d'individus à valeur estimée, la fonction d'aptitude selon,

$$F(I) = \Sigma_n \left( \pi - \left| \beta_{I,n} - \beta_n \right| \right)^2,$$

où $\beta_n$ signifie l'angle d'incidence de signal mesuré de la n-ième position de mesure ($x_n$; $y_n$) de la source de signal pouvant se déplacer (104).

4. Dispositif selon l'une des revendications 1 à 3, qui est réalisé pour former à chaque étape d'itération, à partir d'une population à valeur estimée actuelle (P), une population à valeur estimée ($P_S$) suivante d'un groupe d'individus à valeur estimée survivants ($P_{sel}$) et d'un groupe d'individus à valeur estimée croisés ($P_{cross}$) qui est générée par croissement d'individus à valeur estimée actuels sélectionnés.

5. Dispositif selon la revendication 4, qui est réalisé pour déterminer le groupe d'individus à valeur estimée survivants ($P_{sel}$) selon la règle suivante:

- maintenir l'individu à valeur estimée à fonction d'aptitude correspondant à l'aptitude la plus grande;
- déterminer n = (1- r)*p - 1 individus à valeur estimée avec une probabilité de

$$\Pr(I) = F(I) / \Sigma_{j=1}^P F(I),$$

où r correspond à un taux de recombinaison, p à un nombre d'individus à valeur estimée de la population à valeur estimée et F(I) à une fonction d'aptitude pour chaque individu à valeur estimée (I) qui indique la grandeur d'une déviation des au moins deux valeurs estimées ($\beta_{I,n}$), obtenues par une valeur estimée individuelle ($L_I$) pour l'emplacement de l'élément de réception (102), pour les données de localisation des au moins deux données de localisation mesurées ($\beta_n$).

6. Dispositif selon la revendication 4 ou 5, qui est réalisé pour obtenir n = r*p/2 paires d'individus à valeur estimée par croissement d'attributs de valeur estimée d'individus à valeur estimée actuels qui sont sélectionnés sur base de Pr (I) = F(I)/$\Sigma_{j=1}^P$ F(I), pour former le groupe croisé d'individus à valeur estimée ($P_{cross}$).

**7.** Dispositif selon l'une des revendications 4 à 6, qui est réalisé pour former une paire ($I_1$' ($x_I$' ; $y_I$' ; $\alpha_I$'); $I_2$' ($x_2$' ; $y_2$' ; $\alpha_2$')) du groupe suivant d'individus à valeur estimée ($P_{cross}$) à partir d'une paire ($I_1$ ($x_I$ ; $y_I$ ; $\alpha_I$); $I_a$ ($x_2$ ; $y_2$ ; $\alpha_2$)) de la population à valeur estimée actuelle selon

$$x_1' = ax_1 + bx_2; \qquad\qquad y_1' = ay_1 + by_2;$$
$$x_2' = bx_1 + ax_2; \qquad\qquad y_1' = by_1 + ay_2;$$

$$\alpha_1' = a\alpha_1 + b\alpha_2; + \varepsilon; \qquad \alpha_2' = b\alpha_1 + a\alpha_2 + \varepsilon;$$

avec a $\in$ [0;1], b = 1 - a et $\varepsilon \in [-\pi/x;+\pi/x]$, où x e [1;100].

**8.** Dispositif selon l'une des revendications 4 à 7, qui est réalisé pour soumettre une fraction (m) prédéfinie de la population à valeur estimée suivante ($P_S$) à une mutation en modifiant l'un des attributs estimés (x; y; $\alpha$) dans une zone chaque fois prédéfinie.

**9.** Dispositif selon l'une des revendications précédentes, qui est réalisé pour interrompre les itérations de l'algorithme évolutif et sortir la valeur estimée ($L_A$') pour l'emplacement de l'élément de réception (102) dès qu'une aptitude (F(I)) d'individu à valeur estimée (I) à fonction d'aptitude correspondant à l'aptitude la plus grande excède une valeur limite ($F_T$) prédéfinie.

**10.** Dispositif selon l'une des revendications précédentes, dans lequel l'emplacement ($L_A$) comporte une position ($x_A$; $y_A$) et une orientation ($\alpha_A$) de l'élément de réception (102) d'un système de coordonnées de référence.

**11.** Dispositif selon l'une des revendications précédentes, dans lequel les signaux sont des signaux électromagnétiques.

**12.** Dispositif selon l'une des revendications précédentes, dans lequel l'élément de réception (102) comporte une antenne destinée à recevoir les signaux électromagnétiques.

**13.** Dispositif selon la revendication 12, dans lequel l'élément de réception (102) comporte un réseau d'antennes avec au moins deux éléments d'antenne.

**14.** Système (100), avec
un élément de réception (102) à un emplacement ($L_A$) dans un système de référence;
une source de signal (104) pouvant se déplacer à différentes positions de mesure ($x_n$; $y_n$), qui peut émettre des signaux qui peuvent être reçus par l'élément de réception (102), sur base desquels peuvent être déterminées des données de localisation ($\beta_n$) qui indiquent un emplacement relatif de l'élément de réception (102) par rapport à la source de signal (104) pouvant se déplacer; et
un dispositif (106) destiné à déterminer une valeur estimée ($L_A$') pour l'emplacement ($L_A$) de l'élément de réception (102) selon l'une des revendications 1 à 13.

**15.** Procédé pour déterminer une valeur estimée ($L_A$') pour un emplacement ($L_A$) d'un élément de réception (102) dans un système de référence, aux étapes suivantes consistant à:

émettre un signal à une position de mesure connue ($x_n$; $y_n$) au moyen d'une source de signal (104) pouvant se déplacer;
recevoir le signal au moyen de l'élément de réception (102);
déterminer, sur base du signal reçu, les données de localisation ($\beta_n$) qui indiquent un emplacement relatif de l'élément de réception (102) par rapport à la source de signal (104) pouvant se déplacer;
déterminer la valeur estimée ($L_A$') sur base d'au moins deux positions de mesure différentes ($x_n$; $y_n$) de la source de signal (104) et les données de localisation correspondantes ($\beta_n$) à l'aide d'un procédé heuristique,
dans lequel la valeur estimée ($L_A$') est estimée de manière itérative sur base d'une pluralité d'individus à valeur estimée (I) avec des attributs de valeur estimée (x; y; $\alpha$) pour l'emplacement ($L_A$) de l'élément de réception, la pluralité d'individus à valeur estimée formant une population à valeur estimée (P),

dans lequel est formée, pour chacun de la pluralité d'individus à valeur estimée dans chaque itération, une fonction d'aptitude (F(I)) qui se base sur les données de localisation mesurées ($\beta_n$) et les positions de mesure correspondantes ($x_n$; $y_n$) de la source de signal (104), pour chaque individu à valeur estimée (I) étant déterminée, sur base des au moins deux positions de mesure différentes ($x_n$; $y_n$) et d'une valeur estimée ($x_l$; $y_l$; $\alpha_l$) pour l'emplacement de l'élément de réception (102), une valeur estimée ($\beta_{l,n}$) pour les données de localisation correspondantes, de sorte que la fonction d'aptitude (F(I)) indique pour chaque individu à valeur estimée (I) la grandeur d'une déviation des au moins deux valeurs estimées ($\beta_{l,n}$), obtenues par une valeur estimée individuelle ($L_l$) pour l'emplacement de l'élément de réception (102), pour les données de localisation d'au moins deux données de localisation mesurées ($\beta_n$), et

dans lequel les données de localisation présentent un angle d'incidence ($\beta_n$) des signaux reçus sur l'élément de réception (102) et/ou un temps d'arrivée de signal duquel peut être déterminée une distance par rapport à la source de signal.

16. Programme d'ordinateur pour réaliser le procédé selon la revendication 15 lorsque le programme d'ordinateur est exécuté sur un ordinateur et/ou un microcontrôleur.

<u>100</u>

<u>102</u>

Empfangselement
Lage: unbekannt
$L_A$

1a) Funksignal

<u>104</u>

Roboter

2. Lokalisierungsdaten

RTLS

Konfiguration

EA

1b) Roboterposition
$(x_n, y_n)$

106

Lage des
Empfangselements
$L_A^I$

**FIGUR 1**

200

Koordinatenursprung auf geeigneten Punkt festlegen — 202

Mobile Signalquelle auf geeigneten Referenzmesspunkt setzen bzw. ausrichten — 204

Ortungssignal aussenden — 206

Empfangen des Ortungssignals mittels Empfangselement — 208

Ermittlung der Lokalisierungsdaten $\beta_n$ — 210

Bestimmen des Schätzwerts $L_A'$ für die Lage $L_A$ des Empfangselements mit EA — 212

# FIGUR 2

FIGUR 3

Anfangspopulation

Fitnessevaluierung

Phenotyp

Eltern-Generation

Selektion

EA

Neue Generation

Rekombination

Finale
Generation

Genotyp

Mutation

# FIGUR 4

$\underline{106}$

504

$L_n(x_n, y_n)$

evolutionärer
Algorithmus

$L_A^I(x_A^I, y_A^I, \alpha_A^I)$

506

$\beta_n$

502

FIGUR 5

**FIGUR 6**

**FIGUR 7**

FIGUR 8

EP 2 427 781 B1

**FIGUR 9A**

**FIGUR 9B**

Fehler der geschätzten Antennenposition

# FIGUR 10A

Fehler von x, y und α für zufällige Messpunkte

# FIGUR 10B

**FIGUR 11A**

0. Iteration

**FIGUR 11B**

5. Iteration

FIGUR 11C

10. Iteration

FIGUR 11D

15. Iteration

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KEMPER et al.** Human-Assisted Calibration of an Angulation Based Indoor Location System. *SENSORS TECHNOLOGIES AND APPLICATIONS, 2008. SENSORCOMM '08. SECOND INTERNATINOAL CONFERENCE ON, IEEE, PISCATAWAY, NJ, USA,* 25. August 2008, 196-201